# EUROPEAN PATENT APPLICATION

(11) **EP 2 464 167 A1**
(43) Date of publication of application: **13.06.2012**
(21) Application number: 10806175.5
(22) Date of filing: 18.06.2010
(51) Int. Cl.: H04W 36/08, H04W 48/18, H04W 84/10

(54) **MOBILE COMMUNICATION SYSTEM, BASE STATION DEVICE, USER EQUIPMENT DEVICE, CONTROL DEVICE, COMPUTER-READABLE MEDIUM, AND CONNECTION SWITCHING CONTROL METHOD**

(30) Priority: 07.08.2009 JP 2009185149; 07.09.2009 JP 2009205711
(71) Applicant: NEC Corporation, Tokyo 108-8001 (JP)
(72) Inventor: NAKATA, Atsushi, Tokyo 108-8001 (JP); SHINDO, Masato, Tokyo 108-8001 (JP)
(74) Representative: Glawe, Delfs, Moll
(86) International application number: PCT/JP2010/004103
(87) International publication number: WO 2011/016173

(57) **Abstract**

A controls apparatus (11) controls connection switching of a mobile station (10) from a first cell (13) to a second cell (14). The first cell is formed by a first base station (17), and the second cell (14) is formed by a second base station (12). At least one of the first base station (17), the mobile station (10) and the control apparatus (11) is configured to be able to recognize whether the second base station (12) is capable of connection switching of the mobile station (10) from the first cell (13) to the second cell (14). Further, whether the control apparatus (11) initiates connection switching of the mobile station (10) from the first cell (13) to the second cell (14) is determined based on a recognition result whether the second base station (12) is capable of connection switching. This suppresses useless signaling caused by initiating unsuccessful connection switching procedure.

## Description

### Technical Field

The present invention relates to a mobile communication system, and, particularly to control of connection switching of a mobile station,

### Background Art

A small base station that can be installed in user's home, office and the like is being developed. The small base station is installed in home, small office and the like by a user who owns the small base station, and connected to an upper-level apparatus on the core network side using an ADSL (Asymmetric Digital Subscriber Line) or optical fiber link. Such a small base station is generally called a femto base station, a femtocell base station, or a home base station. Further, the size (cover area) of a cell formed by a small base station is significantly smaller than that of a macro cell used hitherto. Therefore, a cell formed by a small base station is called a femtocell, a home cell and the like. The 3GPP (Third Generation Partnership Project) defines such as small base station as Home Node B (HNB) and Home evolved Node B (HeNB) and promotes the standardization. HNB is a small base station for UTRAN (UMTS (Universal Mobile Telecommunications System) Terrestrial Radio Access Network), and HENS is a small base station for LATE (Long Term Evolution)/ E-UTRAN (Evolved UTRAN).

In this specification, such a small base station is called a home base station, and a cell formed by the home base station is called "femtocell". Note that home base stations for UTRAN and E-UTRAN under consideration by the 3GPP are referred to as HNB and HeNB, respectively, or collectively as H(e)NB.

The 3GPP is currently working on Release 9. In Release 9, Inbound Mobility to HNB is under discussion, and it is actively discussed by RAN Working Group 2 (RAN WG2) and RAN Working Group 3 (RAN WG3). Inbound Mobility means inter-cell mobility of a mobile station from a macro cell formed by a macro base station (Node B) to a femtocell or inter-cell mobility of a mobile station between femtocells. Inter-cell mobility of a mobile station is an operation that establishes a connection (RNC connection etc.) with a target cell and releases a connection with a source cell (which is referred to hereinafter as connection switching).

Connection switching during communication, namely, "handover" is particularly a subject of discussion of Inbound Mobility. At the time of handover, connection switching of a mobile station during communication is performed at the initiative of a network (UTRAN, E-UTRAN etc.). In WCDMA(Wideband CDMA)/UTRAN, "during communication" is CELL_DCII state where a dedicated channel (DCH: Dedicated Channel) is established between a base station or a base station controller (RNC: Radio Network Controller) and a mobile station. In LTE(Long Term Evolution)/E-UTRAN, "during communication" corresponds to the RRC_CONNECTED state where data transmission/reception is performed between a base station and a mobile station using downlink and uplink shared channels (PDSCH and PUSCH).

Further, connection switching of Inbound Mobility commonly involves SRNS (Serving Radio Network Subsystem) relocation. This is because a radio resource management entity is changed between a cell before movement (source cell) and a cell after movement (target cell). Radio resource management of a macro cell of UTRAN is carried out by a base station controller (RNC: Radio Network Controller), whereas the radio resource management function of a femtocell of UTRAN is assigned to each HNB.

In WCDMA/UTRAN, connection switching of a mobile station in CELL_DCH state, namely, handover/SRNS relocation is initiated at the initiative of a network. Specifically, RNC that performs radio resource management of a cell before movement (which is referred to hereinafter as a source cell) determines initiation of handover/SRNS relocation. Note that, in the case of using HNB, the radio resource management function which has been assigned to RNC in a macro cell is assigned to HNB. Therefore, HNB (control apparatus installed in HNB) determines initiation of handover/SRNS relocation. In LTE/E-UTRA also, connection switching of a mobile station in RRC_CONNECTED state is initiated at the initiative of a network (to be specific, a source base station (eNode B: evolved Node B)).

Contribution R2-093952 presented in 3GPP RAN WG2#66bis meeting (Non-Patent Literature 1) and contribution R3-090802 presented in 3GPP RAN WG2#63bis meeting (Non-Patent Literature 2) contain proposals for Inbound Mobility from a marco cell to a femtocell. The proposals in those contributions are being discussed as possible ideas for standardization.

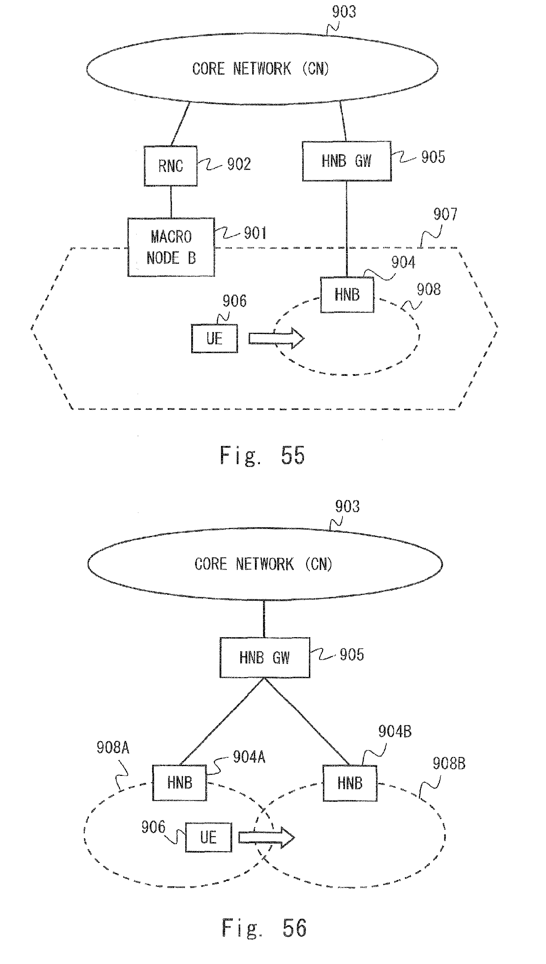

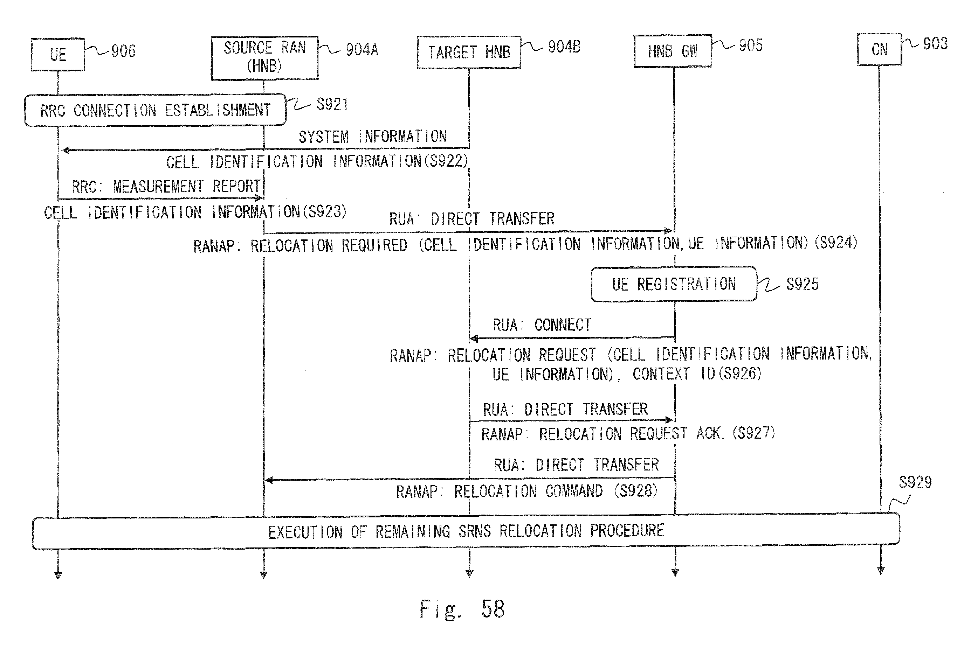

Hereinafter, the Inbound Mobility operation proposed in the contributions R2-093952 and R3-090802 are described with reference to Figs. 55 to 58. Figs. 55 and 58 are network configuration diagrams used for explanation of the Inbound Mobility operation. Fig. 55 shows the way a mobile station (UE: User Equipment) 906 performs connection switching from a macro cell 907 formed by a macro base station (Node B) to a femtocell 908 formed by a HNB 904. A RNC 902 is placed between a Macro Node B 901 and a core network (CN) 903, and performs radio resource management of the macro cell 907, control of connection switching including handover control and the like.

The CN 903 includes a circuit switching center (MSC: Mobile Switching Center), a packet switching center (SGSN: Serving GPRS Support Node), a location register and the like, and performs location registration of the UE 906, paging of the UE 906, control of outgoing and incoming calls of the UE 906, routing and transfer of transmission and received data of the UE 906 and the like.

A HNB gateway (HNB GW) 905 is placed between the CN 903 and the HNB 904, and relays user data and control data between the CN 903 and the HNB 904.

On the other hand, Fig. 56 shows the way the UE 906 performs connection switching from a femtocell 908A formed by a HNB 904A to a femtocell 908B formed by a HNB 904B. In the example of Fig. 56, the HNBs 904A and 904B are connected to the same HNB GW 905.

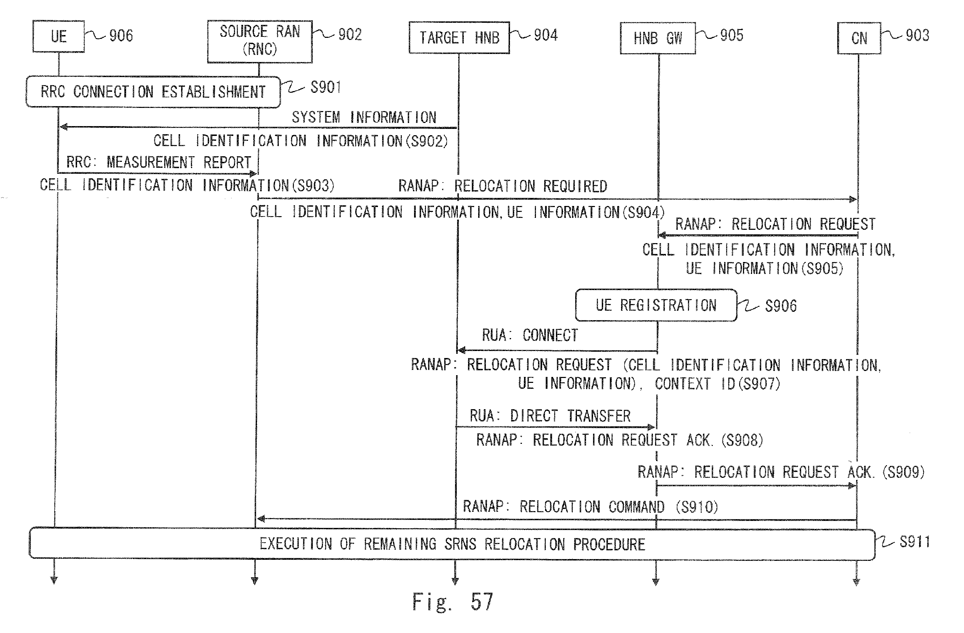

Fig. 57 is a sequence diagram showing a successful example of the Inbound Mobility operation of the UE 906 shown in Fig. 55. In Fig. 57, Source RAN indicates a source radio network with which the UE has been connected before it moves to the HNB. Thus, in the case of Fig. 55 where a source cell is the macro cell 907, the RNC 902 that manages the Macro Node B 901 is an equivalent of Source RAN. Further, Target HNB indicates HNB that forms a target cell, and, in the case of Fig. 55, the HNB 904 is an equivalent of Target HNB.

In Step S901, RNC (Radio Resource Control) connection is established between the RNC 902 that manages the source cell (macro cell 907) and the USE 906. In Step S902, the UE 906 receives System Information (specifically, System Information Block type 3) broadcasted to the target cell (femtocell 908) and acquires cell identification information of the target cell from System Information. The cell identification information is CGI (Cell Global Identity) or CI (Cell Identity). Note that CGI is a combination of PLMN ID, which is an identifier of a telecommunications carrier, and CI.

In Step S903, the UE 906 provides a measurement report (RRC Measurement Report) to which the cell identification information of the target cell (femtocells 908) is added to the Source RAN (RNC 902). RRC Measurement Report includes a measurement result of reception quality of a radio signal (P-CPICH:Primary Common Pilot Channel) from the target cell.

The Source RAN (RNC 902) determines handover/SRNS relocation to the femtocell 908 based on the measurement report received from the UE 906, and initiates signaling for handover/SRNS relocation. Specifically, in Step S904, the RNC 902 transmits RANAP: Relocation Required message to the CN 903. Relocation Required message includes the cell identification information of the target cell (femtocell 908) and information of the UE 906.

In Step S905, the HNB GW 905 that manages the HNB 904 receives RANAP: Relocation Request message from the CN 903. Relocation Request message includes the cell identification information of the target cell (femtocell 908) and information of the UE 906.

In Step S906, the HNB GW 905 executes UE Registration procedure based on the cell identification information and the UE information included in Relocation Request message. In UE Registration, Context ID required for establishing RUA Connection between the HNB 904 and the HNB GW 905 is decided to enable transmission and reception of HNBAP message used in an interface (Iuh interface) between HNB and HNB GW.

In Step S907, the HNB GW 905 transmits RANAP: Relocation Request to the HNB 904 through RUA: Connect message. In Step 908, the HNB 904 transmits RANAP: Relocation Request Acknowledge to the HNB GW 905 through RUA: Direct Transfer message. In Step S909, the HNB GW 905 transmits RANAP: Relocation Request Acknowledge message to the CN 903. In Step S910, the CN 903 transmits RANAP: Relocation Commit message to the Source RAN (RNC 902). Finally, in Step S911, the remaining SRNS relocation procedure is performed.

Inbound. Mobility shown in Fig. 57 is achieved by the UE compliant with Release 9 and the HNB and RNC compliant with Release 9. Specifically, the UE up to Release 8 does not support the function of transmitting RRC: Measurement Report including cell identification information of a target cell. Further, the HNB up to Release 8 does not support the procedure of performing connection switching of the UE at the initiative of a network (E-UTRAN) with use of RANAP, HNBAP, RUA protocols (i.e. handover procedure and SRNS relocation procedure).

Fig. 58 is a sequence diagram showing a successful example of the Inbound Mobility operation of the UE 906 shown in Fig. 56. Source RAN in Fig. 58 is an equivalent of the HNB 904A, and Target HNB is an equivalent of the HNB 904B. Differences of Fig. 58 from Fig. 57 are mainly described below. Steps S921 to S923 of Fig. 58 are the same as Steps S901 to S903 of Fig. 57 except that Source RAN is the HNB 904A.

In Step S924, the Source RAN (HNB 904A) transmits, to the HNB GW 905, RUA: Direct Transfer message including RANAP: Relocation Required. RANAP: Relocation Required includes the cell identification information of the target cell (femtocell 908B) and information of the UE 906.

In Step S925, the HNB GW 905 executes UE Registration procedure based on the cell identification information and the UE information included in RANAP: Relocation Required message. By UE Registration, RUA Connection between the Target HNB 904 and the HNB GW. 905 is established, and Context ID is decided.

Steps S926 and S927 are the same as Steps S907 and S908 of Fig. 57. In Step S928, the HNB GW 905 transmits, to the Source RAN (HNB 904A), RUA: Direct Transfer message including RANAP: Relocation. Command message. Finally, in Step S929, the remaining SRNS relocation procedure is performed.

### Citation List

### Non Patent Literature

[NPL 1] R2-093952 "Inbound Mobility to CSG cell from UMTS cell" [online], 3GPP, [searched on July 18, 2009], Internet <URL: ftp://ftp.3gpp.org/tsg_ran/WG2_RL2/TSGR2__66bis/Docs/R2-093952.zip>
[NPL 2] R3-090802 "Discussion on Inbound Mobility from 3G Marco Cell to HNB" [online], 3GPP, [searched on July 18, 2009], Internet <URL: ftp://ftp.3gpp.org/tsg_ran/WG3_Iu/TSGR3_.63bis/Docs/R3-090802.zip>

### Summary of Invention

### Technical Problem

As described above, in 3GPP Release 9, Inbound Mobility to a femtocell formed by HNB is expected to be supported. However, UE and HNB before 3GPP Release 9 already exist in the market. Whether firmware (control program) of such equipment is updated to be compatible with 3GPP Release 9 or not depends on a user who owns this equipment. Particularly, HNB is user-owned equipment (Customer Premise Equipment), like UE. Therefore, even when equipment owned by telecommunications carriers such as Macro Node B, RNC and HNB GW are upgraded to Release 9, it is expected that HNB owned by users continue to exist in the field, remaining with Release 8, in other words, remaining incapable of Inbound Mobility. Note that it is basic operational policy in the 3GPP that HNB is commercially developed by Un-coordinated Method, not Coordinated Method which begins operating after pre-coordination with telecommunications carrier-owned equipment such as Macro Node B, RNC and HNB GW.

The inventors of the present invention have found a problem that, in the field where Release 9 capable equipment and pre-Release 9 (Release 8 etc.) capable equipment exit together, useless signaling occurs due to that a control apparatus (RNC, HNB etc.) serving as a connection-switching control entity of a source cell initiates a connection switching procedure, i.e., handover/SRNS relocation procedure, which is not likely to be successful. What is problematic specifically is a connection-switching control entity (RNC or HNB) and a UE support Inbound Mobility, whereas HNB of a target cell does not support Inbound Mobility. In this case, even if a connection-switching control entity of a source cell initiates the handover/SRNS relocation procedure by transmitting RANAP: Relocation Required message to the core network, handover/SRNS relocation to a target cell always results in failure.

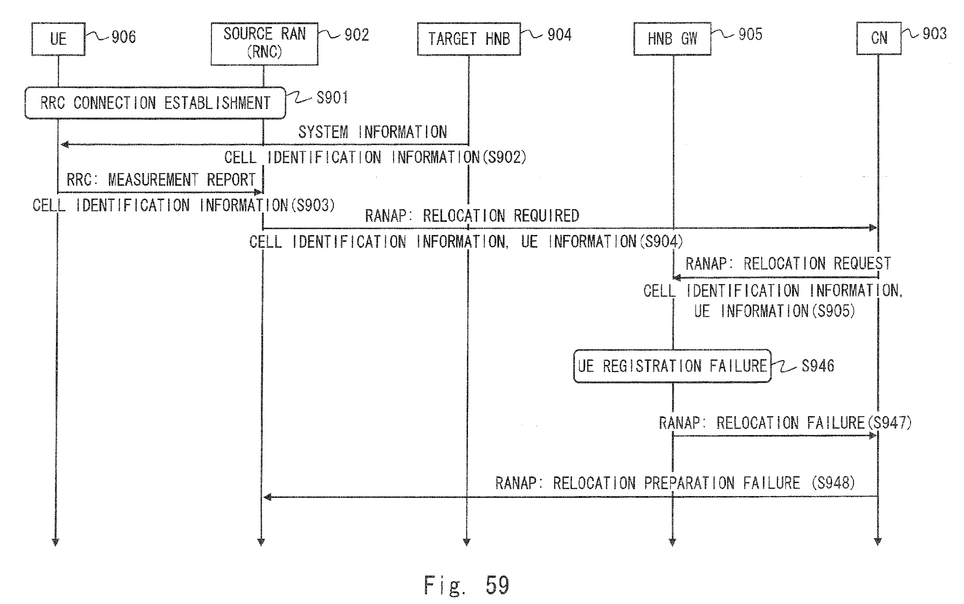

Figs. 59 and 58 are sequence diagrams showing failure examples predicted by the inventors of the present invention for handover/SRNS relocation to a femtocell. Fig. 59 corresponds to Fig. 55 described above, and it relates to handover/SRNS relocation of the UE 906 from the macro cell 907 to the femtocell 908. When the Target HNB (HNB 904) is not capable of Inbound Mobility, UE Registration of the HNB GW 905 results in failure as shown in Step S946 of Fig. 59. This is because the HNB 904 cannot respond to HNBAP: UE Registration message. Given this result, the HNB GW 905 transmits, to the CN 903, RANAP: Relocation Failure message indicating a failure of handover/SRNS relocation. Then, the Source RAN (RNC902) receives RANAP: Relocation Preparation Failure, and handover/SRNS relocation to a target cell ends up in failure.

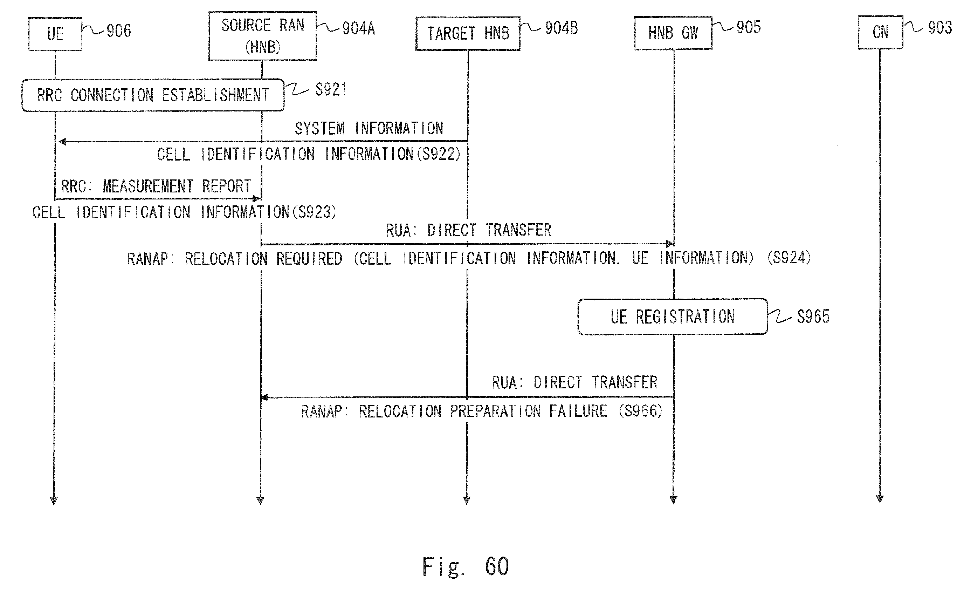

Fig. 60 corresponds to Fig. 56 described above, and it relates to handover/SRNS relocation of the UE 906 from the femtocell 908A to the femtocell 908B. When the Target HNB (HNB 904B) is not capable of Inbound Mobility, UE Registration of the HNB GW 905 results in failure as shown in Step S965 of Fig. 60. Given this result, the HNB GW 905 transmits, to the Source RAN (HNB 904A), RUA: Direct Transfer message including RANAP: Relocation Preparation Failure message indicating a failure of handover/SRNS relocation. Then, the HNB 904A receives RANAP: Relocation Preparation Failure, and handover/SRNS relocation to a target cell ends up in failure.

The present invention has been accomplished on the basis of the above-described findings of the inventors, and an exemplary object of the invention is to provide a mobile communication system, base station apparatus, mobile station apparatus, control apparatus, target control apparatus, program, non-transitory computer readable medium storing program, and connection switching control method which can contribute to suppressing useless signaling caused by initiating an unsuccessful connection switching procedure.

### Solution to Problem

In a first exemplary aspect of the invention, a mobile communication system includes a first and a second base stations, a mobile station, and a control apparatus. The first base station forms a first cell. The second base station forms a second cell. The mobile station is capable of communicating with the first and second base stations. The control apparatus controls connection switching of the mobile station from the first cell to the second cell. At least one of the first base station, the mobile station and the control apparatus is configured to be able to recognize whether or not the second base station is capable of connection switching of the mobile station from the first cell to the second cell. Further, in the mobile communication system, whether or not the control apparatus initiates connection switching of the mobile station from the first cell to the second cell is determined based on a recognition result of connection switching capability of the second base station.

In a second exemplary aspect of the invention, a base station includes a transmitting unit that transmits broadcast information including cell identification information identifying its own cell and first information indicating whether or not connection switching of a mobile station to the its own cell is possible.

In a third exemplary aspect of the invention, a mobile station includes a radio communication unit and a control unit. The radio communication unit performs radio communication with a base station. The control unit determines whether or not to transmit a measurement report about reception quality of a radio signal from an adjacent cell to the base station or a control station that manages the base station based on an analysis result of first information for determining whether or not the adjacent cell is capable of connection switching, the first information broadcasted in the adjacent cell.

In a fourth exemplary aspect of the invention, a mobile station includes a receiving unit that receives broadcast information including cell identification information identifying a cell of a base station and first information indicating whether or not connection switching to the base station is possible.

In a fifth exemplary aspect of the invention, a control apparatus controls connection switching of a mobile station from a first cell to a second cell. The control apparatus is configured to determine whether or not to initiate connection switching of the mobile station to the second cell based on (a) a measurement report about reception quality of a radio signal from the second cell and (b) first information for determining whether or not the second cell is capable of connection switching, both received from the mobile station through a first base station that forms the first cell.

In a sixth exemplary aspect of the invention, a control apparatus controls connection switching of a mobile station from a first cell to a second cell. The control apparatus is configured to determine whether or not to initiate connection switching of the mobile station from the first cell to the second cell by accessing a recording apparatus able to store information about connection switching capability of the second cell.

In a seventh exemplary aspect of the invention, a control method of connection switching in a control apparatus that controls connection switching of a mobile station from a first cell to a second cell includes the following (a) to (c):
(a) receiving a measurement report about reception quality of a radio signal from the second cell from the mobile station,
(b) recognizing whether or not the second cell is capable of connection switching, and
(c) determining whether or not to initiate connection switching of the mobile station to the second cell based on the measurement report and a result of the recognizing.

In an eighth exemplary aspect of the invention, a program causes a computer to execute a control process including the following (a) and (b). The program may be stored in a non-transitory computer readable medium.
(a) analyzing first information for determining whether or not an adjacent cell is capable of connection switching, the first information broadcasted in the adjacent cell, and
(b) determining whether or not to transmit a measurement report about reception quality of a radio signal from the adjacent cell to a base station or a control station that manages the base station based on a result of the analyzing.

In a ninth exemplary aspect of the invention, a program causes a computer to execute a control process for a mobile station including a radio communication unit that performs radio communication with a base station. The program may be stored in a non-transitory computer readable medium. The control process includes controlling the radio communication unit to transmit, to the base station or a control station that manages the base station, a measurement report about reception quality of a radio signal from an adjacent cell an first information for determining whether or not the adjacent cell is capable of connection switching.

In a tenth exemplary aspect of the invention, a program causes a computer to execute a process of controlling connection switching of a mobile station from a first cell to a second cell. The program may be stored in a non-transitory computer readable medium. The process includes the following (a) to (c):
(a) acquiring a measurement report about reception quality of a radio signal from the second cell, received from the mobile station,
(b) recognizing whether or not the second cell is capable of connection switching, and
(c) determining whether or not to initiate connection switching of the mobile station to the second cell based on the measurement report and a result of the recognizing.

In an eleventh exemplary aspect of the invention, a mobile communication system includes a first and a second base stations, a control apparatus, and an upper-level apparatus. The first base station forms a first cell. The second base station forms a second cell. The mobile station can communicate with the first and second base stations. The upper-level apparatus is installed in a network between the second base station and the control apparatus. The control apparatus controls connection switching of the mobile station from the first cell to the second cell. The control apparatus is configured to be able to determine whether or not to initiate connection switching of the mobile station from the first cell to the second cell by accessing a recording apparatus able to store information about connection switching capability of a plurality of base stations including the second base station. Further, the control apparatus is configured to update the information stored in the recording apparatus based on a reception result of a message indicating connection switching capability of the second base station, the message generated by the second base station or the upper-level apparatus.

In a twelfth exemplary aspect of the invention, a source control apparatus controls connection switching of a mobile station from a first cell to a second cell. The source control apparatus includes a connection switching control unit that determines whether or not to initiate connection switching of the mobile station from the first cell to the second cell by accessing a recording apparatus able to store information about connection switching capability of a plurality of cells including the second cell. Further, the connection switching control unit updates the information stored in the recording apparatus based on a reception result of a message indicating connection switching capability of the second base station, the message generated by the second base station or an upper-level apparatus installed in a network between the second base station and the control apparatus.

In a thirteenth exemplary aspect of the invention, a target control apparatus includes a control unit that generates a response message to a request message requesting connection switching of a mobile station from a first base station to a second base station. The response message includes information indicating connection switching capability of a nearby base station located near the second base station.

In a fourteenth exemplary aspect of the invention, a program causes a computer to execute a control process including the following (a) and (b). The program may be stored in a non-transitory computer readable medium.
(a) determining whether or not to initiate connection switching of the mobile station from the first cell to the second cell by accessing a recording apparatus able to store information about connection switching capability of a plurality of cells including the second cell, and
(b) updating the information stored in the recording apparatus based on a reception result of a message indicating connection switching capability of the second base station, the message generated by the second base station or an upper-level apparatus installed in a network between the second base station and the control apparatus.

In a fifteenth exemplary aspect of the invention, a program causes a computer to execute generating a response message to a request message requesting connection switching of a mobile station from a first base station to a second base station. The response message includes information indicating connection switching capability of a nearby base station located near the second base station. The program may be stored in a non-transitory computer readable medium.

In a sixteenth exemplary aspect of the invention, a control method of connection switching in a control apparatus that controls connection switching of a mobile station from a first cell to a second cell includes the following (a) and (b):
(a) determining whether or not to initiate connection switching of the mobile station from the first cell to the second cell by accessing a recording apparatus able to store information about connection switching capability of a plurality of cells including the second cell, and
(b) updating the information stored in the recording apparatus based on a reception result of a message indicating connection switching capability of the second base station, the message generated by the second base station or an upper-level apparatus installed in a network between the second base station and the control apparatus.

In a seventeenth exemplary aspect of the invention, a control method of a control apparatus used in a mobile communication system includes generating a response message to a request message requesting connection switching of a mobile station from a first base station to a second base station. The response message includes information indicating connection switching capability of a nearby base station located near the second base station.

### Advantageous Effects of Invention

According to the exemplary aspects of the invention described above, it is possible to provide a mobile communication system, base station apparatus, mobile station apparatus, control apparatus, target control apparatus, program, non-transitory computer readable medium storing program, and connection switching control method which can contribute to suppressing useless signaling caused by initiating an unsuccessful connection switching procedure.

### Brief Description of Drawings

Fig. 1 shows a network configuration example of a mobile communication system according to a first exemplary embodiment of the invention;
Fig. 2 shows a network configuration example (where source cell 13 is a macro cell) of the mobile communication system according to the first exemplary embodiment of the invention;
Fig. 3 shows a network configuration example (where source cell 13 is a femtocell) of the mobile communication system according to the first exemplary embodiment of the invention;
Fig. 4 shows transmitting and receiving operation of a mobile station (UE) in the mobile communication system according to the first exemplary embodiment of the invention;
Fig. 5 is a sequence diagram showing a specific example of a handover procedure in the mobile communication system according to the first exemplary embodiment of the invention;
Fig. 6 is a flowchart showing a specific example of a determination procedure of a mobile station in the mobile communication system according to the first exemplary embodiment of the invention;
Fig. 7 shows a first definition example of support information in the first exemplary embodiment of the invention;
Fig. 8 shows a second definition example of support information in the first exemplary embodiment of the invention;
Fig. 9 shows a definition example of operation when a mobile station (UE) receives support information in the first exemplary embodiment of the invention;
Fig. 10 shows a third definition example of support information in the first exemplary embodiment of the invention;
Fig. 11 shows a fourth definition example of support information in the first exemplary embodiment of the invention;
Fig. 12 shows another definition example of operation when a mobile station (UE) receives support information in the first exemplary embodiment of the invention;
Fig. 13 shows a configuration example of a home base station (HNB) in the mobile communication system according to the first exemplary embodiment of the invention;
Fig. 14 shows a configuration example of a mobile station (UE) in the mobile communication system according to the first exemplary embodiment of the invention;
Fig. 15 shows a network configuration example of a mobile communication system and transmitting and receiving operation of a mobile station (UE) according to a second exemplary embodiment of the invention;
Fig. 16 is a sequence diagram where handover is initiated by SRNS relocation in the mobile communication system according to the second exemplary embodiment of the invention;
Fig. 17 is a flowchart showing a specific example of a determination procedure of a mobile station in the mobile communication system according to the second exemplary embodiment of the invention;
Fig. 18 is a sequence diagram showing a case where cell re-selection procedure upon release of a radio link is initiated in the second exemplary embodiment of the invention;
Fig. 19 is a sequence diagram showing a case where cell re-selection procedure upon redirection instruction is initiated in the second exemplary embodiment of the invention;
Fig. 20 shows a definition example of the content of a measurement report to be reported by a mobile station (UE) in the second exemplary embodiment of the invention;
Fig. 21 shows a definition example of operation when a mobile station (UE) receives information element (IE) indicating the content of a measurement report in the second exemplary embodiment of the invention;
Fig. 22 shows an example of the content of a measurement report transmitted by a mobile station (UE) in the second exemplary embodiment of the invention;
Fig. 23 shows a configuration example of a control apparatus in the mobile communication system according to the second exemplary embodiment of the invention;
Fig. 24 shows a network configuration example of a mobile communication system according to a third exemplary embodiment of the invention;
Fig. 25 is a sequence diagram showing a handover/SRNS relocation procedure in the mobile communication system according to the third exemplary embodiment of the invention;
Fig. 26 is a flowchart showing a specific example of a determination procedure of a control apparatus in the mobile communication system according to the third exemplary embodiment of the invention;
Fig. 27 shows a network configuration example of a mobile communication system according to a fourth exemplary embodiment of the invention;
Fig. 28 shows a specific example of information stored in a database in the mobile communication system according to the fourth exemplary embodiment of the invention;
Fig. 29 is a sequence diagram showing a handover/SRNS relocation procedure in the mobile communication system according to the fourth exemplary embodiment of the invention;
Fig. 30 is a sequence diagram showing an example of an update procedure of a database in the mobile communication system according to the fourth exemplary embodiment of the invention;
Fig. 31 is a sequence diagram showing another example of an update procedure of a database in the mobile communication system according to the fourth exemplary embodiment of the invention;
Fig. 32 is a sequence diagram showing an example of an update procedure of a database in a mobile communication system according to a fifth exemplary embodiment of the invention;
Fig. 33 is a sequence diagram showing another example of an update procedure of a database in the mobile communication system according to the fifth exemplary embodiment of the invention;
Fig. 34 is a sequence diagram showing an example of an invalidation procedure of information stored in a database in a mobile communication system according to a fifth exemplary embodiment of the invention;
Fig. 35 is a sequence diagram showing another example of an invalidation procedure of information stored in a database in a mobile communication system according to a fifth exemplary embodiment of the invention;
Fig. 36 is a sequence diagram showing an example of an update procedure of a database in a mobile communication system according to a sixth exemplary embodiment of the invention;
Fig. 37 is a sequence diagram showing a handover/SRNS relocation procedure in a mobile communication system according to a seventh exemplary embodiment of the invention;
Fig. 38 shows a first definition example of a message extended to transfer a capability list according to an eighth exemplary embodiment of the invention;
Fig. 39 shows a second definition example of a message extended to transfer a capability list according to the eighth exemplary embodiment of the invention;
Fig. 40 shows a third definition example of a message extended to transfer a capability list according to the eighth exemplary embodiment of the invention;
Fig. 41 shows a fourth definition example of a message extended to transfer a capability list according to the eighth exemplary embodiment of the invention;
Fig. 42 shows a first definition example of a capability list according to the eighth exemplary embodiment of the invention;
Fig. 43 shows a fifth definition example of a message extended to transfer a capability list according to the eighth exemplary embodiment of the invention;
Fig. 44 shows a second definition example of a capability list according to the eighth exemplary embodiment of the invention;
Fig. 45 shows a sixth definition example of a message extended to transfer a capability list according to the eighth exemplary embodiment of the invention;
Fig. 46 shows a third definition example of a capability list according to the eighth exemplary embodiment of the invention;
Fig. 47 shows a seventh definition example of a message extended to transfer a capability list according to the eighth exemplary embodiment of the invention;
Fig. 48 shows an eighth definition example of a message extended to transfer a capability list according to the eighth exemplary embodiment of the invention;
Fig. 49 shows a ninth definition example of a message extended to transfer a capability list according to the eighth exemplary embodiment of the invention:
Fig. 50 shows a fourth definition example of a capability list according to the eighth exemplary embodiment of the invention:
Fig. 51 is a sequence diagram showing an example of a database update procedure at a success of handover/SRNS relocation of USE from a macro cell to a femtocell in the mobile communication system according to the eighth exemplary embodiment of the invention;
Fig. 52 is a sequence diagram showing an example of a database update procedure at a failure of handover/SRNS relocation of UE from a macro cell to a femtocell in the mobile communication system according to the eighth exemplary embodiment of the invention;
Fig. 53 is a sequence diagram showing an example of a database update procedure at a success of handover/SRNS relocation of UE between femtocells in the mobile communication system according to the eighth exemplary embodiment of the invention;
Fig. 54 is a sequence diagram showing an example of a database update procedure at a failure of handover/SRNS relocation of UE between femtocells in the mobile communication system according to the eighth exemplary embodiment of the invention;
Fig. 55 is a network configuration diagram related to handover of UE from a macro cell to a femtocell;
Fig. 56 is a network configuration diagram related to handover of UE between femtocells;
Fig. 57 is a sequence diagram showing a successful example of handover/SRNS relocation from a macro cell to a femtocell;
Fig. 58 is a sequence diagram showing a successful example of handover/SRNS relocation between femtocells;
Fig. 59 is a sequence diagram showing a failure example of handover/SRNS relocation from a macro cell to a femtocell;
Fig. 60 is a sequence diagram showing a failure example of handover/SRNS relocation between femtocells.

### Description of Embodiments

Exemplary embodiments of the present invention will be described hereinafter in detail with reference to the drawings. In the drawings, the identical reference symbols denote identical clements and the redundant explanation thereof is omitted as appropriate to clarify the explanation.

### <First exemplary embodiment>

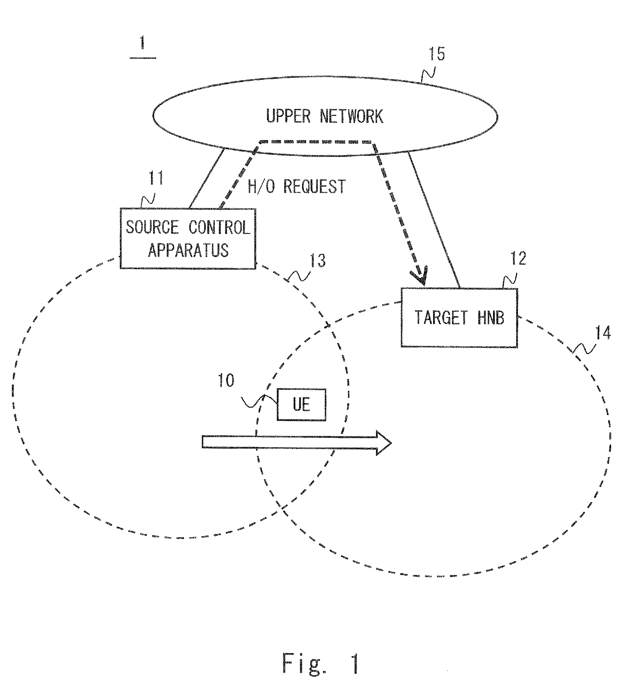

Fig. 1 shows a network configuration example of a mobile communication system 1 according to the exemplary embodiment. Fig. 1 shows the way a UE 10 moves from a source cell 13 to a target cell 14.

In Fig. 1, a source control apparatus 11 controls connection switching including handover/SRNS relocation of the USE 10 from the source cell 13 to an adjacent cell. As described above, when the source cell 13 is a macro cell, RNC that performs radio resource management of the macro cell is an equivalent of the control apparatus 11. Further, when the source cell 13 is a femtocell, HNB that performs radio resource management of the femtocell is an equivalent of the control apparatus 11. Note that the layout of the radio resource management function including connection switching (specifically, handover, sell re-selection) of the UE 10 is appropriately determined according to the design concept of network architecture. Therefore, where to locate the control apparatus 11 is a matter selectable as appropriate. The control apparatus 11 may be disposed integrally with a base station (Macro Node B or HNB) that forms the source cell 13 or may be disposed as RNC or HNB GW.

A target HNB 12 forms the target cell 14, which is a femtocell. An upper network 15 is a network to which the source control apparatus 11 and the target HNB 12 are connected. The upper network 15 includes a core network including an exchange and a HNB GW.

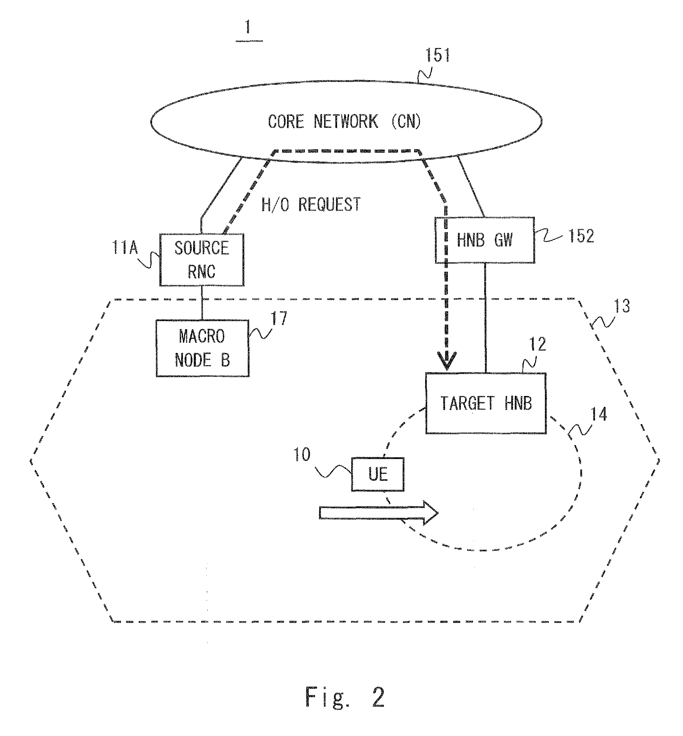

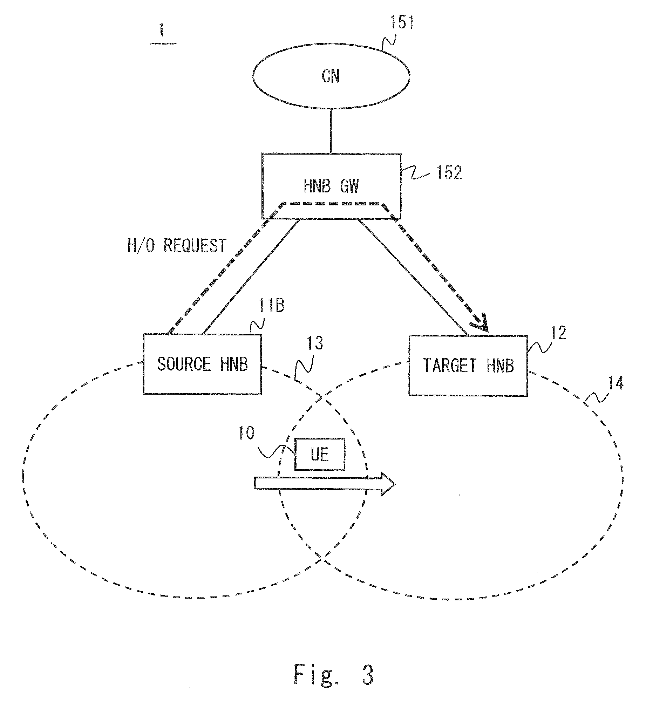

Fig. 2 shows a specific example of network configuration of the mobile communication system 1 in the case where the source cell 13 is a macro cell. In Fig. 2, a source RNC 11A is an equivalent of the source control apparatus 11. Further, the upper network 15 includes a core network 151 and a HNB GW 152. On the other hand, Fig. 3 shows a specific example of network configuration of the mobile communication system 1 in the case where the source cell 13 is a femtocell. In Fig. 3, a source HNB 11B is an equivalent of the source control apparatus 11.

In this exemplary embodiment, the UE 10 or the control apparatus 11 recognizes whether the target HNB 12 is capable of Inbound Mobility from the source cell 13 to the target cell 14, that is, handover/SRNS relocation of the UE 10. Then, based on a recognition result about Inbound Mobility capability of the target HNB 12, the control apparatus 11 determines whether or not to initiate handover/SRNS relocation of the UE 10 to the target cell 14. Specifically, when it is recognized that the target HNB 12 is not capable of Inbound Mobility, the control apparatus 11 does not initiate the handover/SRNS relocation procedure of the UE 10 to the target cell 14. This prevents the mobile communication system 1 from initiating the handover/SRNS relocation procedure which is not likely to be successful, thereby suppressing useless signaling.

Next, a specific example of a technique for recognizing whether or not the target HNB 12 is capable of Inbound Mobility is described below. A case where the target HNB 12 broadcasts a radio signal including "support information" into the target cell 14 is described by way of illustration. The support information is information for determining whether or not the HNB 12 supports Inbound Mobility to the target cell 14. Specifically, new information element (IE) which is not transmitted by HNB up to 3GPP Release 8 that does not support Inbound Mobility to a femtocell may be defined. Then, HNB after 3GPP Release 9 that supports Inbound Mobility to a femtocell may transmit new IE into the target cell 14 through a broadcast channel (BCH) or the like. This enables recognition of Inbound Mobility capability of the target HNB 12 depending on whether or not new IE is included in the information broadcasted by the target HNB 12. Thus, new IE corresponds to support information in this case.

A way to suppress useless signaling is to control initiation of handover/SRNS relocation of the UE 10 to the target cell 14 depending on whether or not new IE is included in broadcast information of the target HNB 12. Note that there are several different techniques that may be used to determine initiation of handover/SRNS relocation depending on the presence or absence of new IE. Hereinafter, as an example of a specific technique, the technique is described in detail that, when new IE is not included in broadcast information of the target HNB 12, inhibits transmission of a measurement report from the UE 10 to the control apparatus 11, so that the handover/SRNS relocation procedure to the target cell 14 is not initiated by the control apparatus 11.

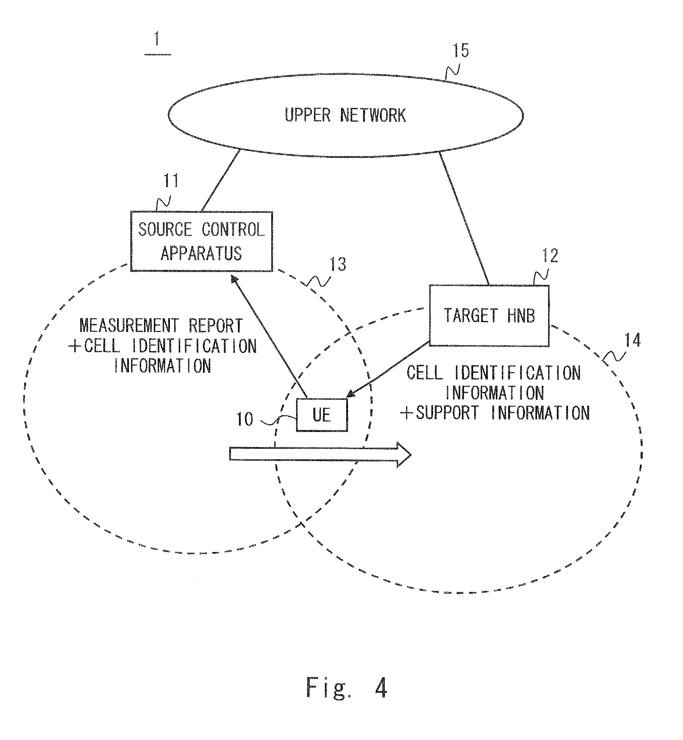

Fig. 4 shows the operation of receiving broadcast information and transmitting a measurement report to the control apparatus 11 by the UE 10. The UE 10 receives broadcast information from the target HNB 12 when it approaches the coverage area of the target cell 14. When the target HNB 12 is capable of Inbound Mobility, the broadcast information includes support information (new IE) in addition to cell identification information.

On condition that support information is included in the broadcast information, The UE 10 transmits a measurement report about the target cell 14 together with cell identification information to the control apparatus 11. On the contrary, when support information is not included in the broadcast information, the UE 10 excludes the target cell 14 from candidates of the measurement report. Thus, the UE 10 does not transmit a measurement report about the target cell 14 to the control apparatus 11. The control apparatus 11 does not determine the target cell 14 as a destination of handover of the UE 10 unless it receives cell identification information and a measurement report about the target cell 14 from the UE 10. Therefore, the handover/SRNS relocation procedure which is not likely to be successful is not initiated, thereby suppressing useless signaling.

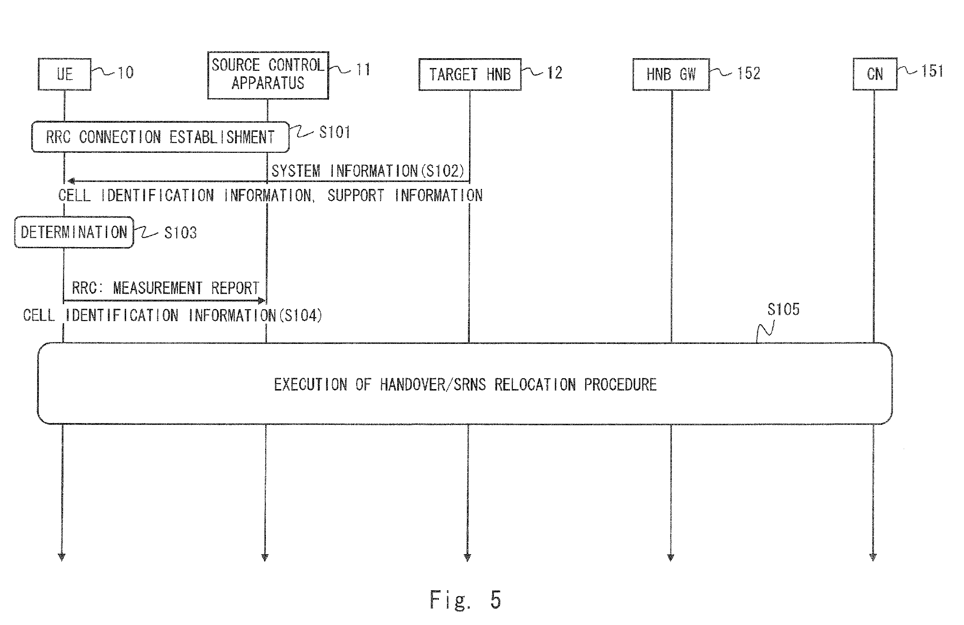

Fig. 5 is a sequence diagram for the specific control technique which is described just above. In Step 101, RRC (Radio Resource Control) connection is established between the control apparatus 11 and the UE 10. In Step S102, the UE 10 which approaches the coverage area of the target cell 14 receives cell identification information and support information (new IE) from the target HNB 12. Note that Fig. 5 corresponds to the case where the target HNB 12 supports Inbound Mobility. New IE, together with cell identification information, may be included in System Information (specifically, System Information Block type 3 or Master Information Block) as shown in Fig. 5.

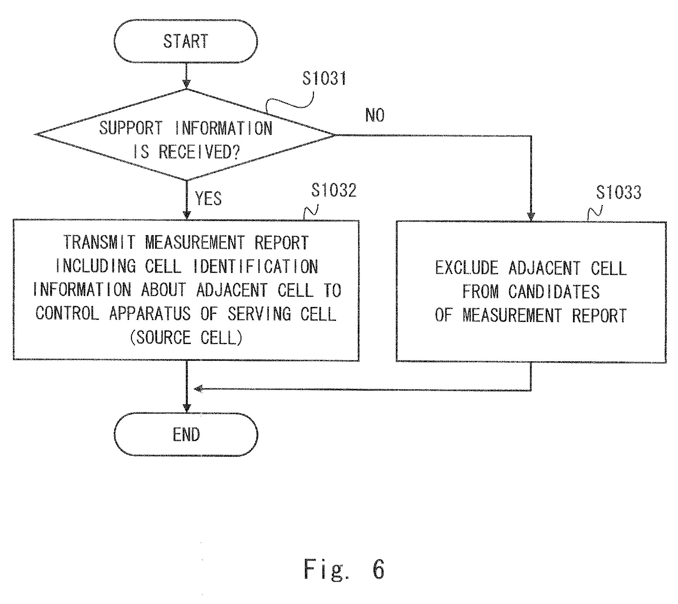

In Step S103, the UE 10 performs determination as to whether or not to transmit a measurement report about the target cell 14 to the control apparatus 11. Fig. 6 is a flowchart showing a specific example of the determination in Step S103. In S1031 of Fig. 6, the UE 10 determines whether or not support information (new IE) is included in broadcast information from the target cell 14. When support information is included (YES in S1031), the UE 10 determines to transmit a measurement report including cell identification information about the target cell 14 to the source control apparatus 11 (S1032). On the other hand, when support information is not included (NO in S1031), the UE 10 excludes the target cell 14 from candidates of the measurement report (S1033). In other words, the UE 10 determines not to transmit a measurement report about the target cell 14 to the control apparatus 11.

The explanation continues with reference back to Fig. 5. According to the determination result in Step S103, the UE 10 transmits a measurement report including cell identification information about the target cell 14 to the control apparatus 11 in Step S104. Finally, in Step S105, the control apparatus 11 decides handover/SRNS relocation to the target cell 14 based on the measurement report received from the UE 10, and initiates the handover/SRNS relocation procedure.

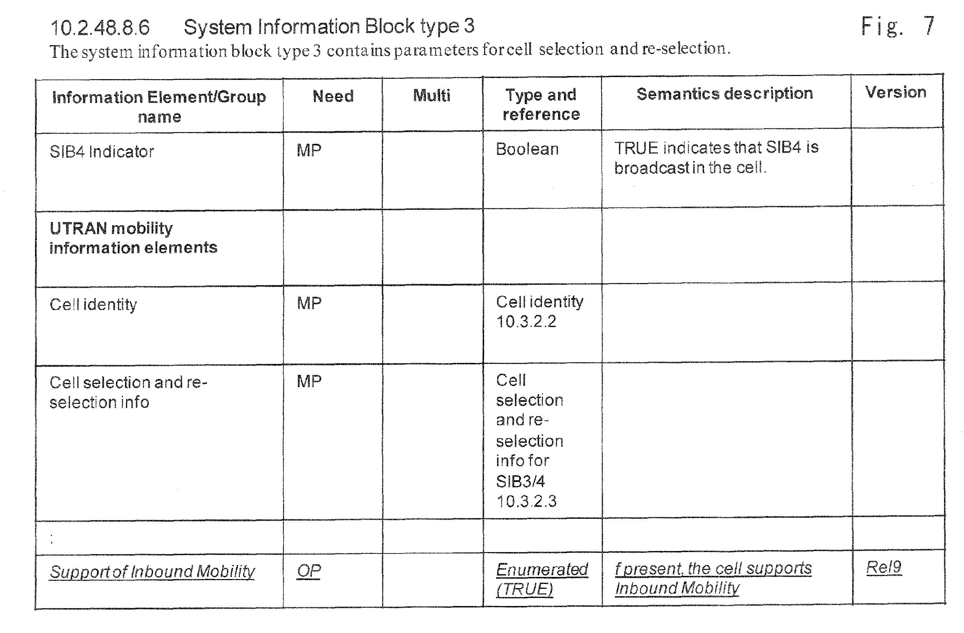

A specific example of support information is described hereinafter with reference to Figs. 7 to 12. Fig. 7 shows a modification example that adds new IE "Support of Inbound Mobility" that can be used as support information to definition of "System Information Block type 3" in 3GPP TS 25.331 (underlined part of Fig. 7). "support of Inbound Mobility" is a parameter literally indicating whether or not a transmission source HNB supports Inbound Mobility. The HNB that supports Inbound Mobility standardized in 3GPP Release 9 can transmit System Information inclusive of "Support of Inbound Mobility". This allows recognition of whether or not a transmission source cell and HNB support Inbound Mobility depending on whether or not "support of Inbound Mobility" exists in System Information received from the HNB. For the details of System Information Block type 3, refer to 3GPP TS 25.331" Radio Resource Control (RRC)" v8.7.0 (2009-06), section 10.2.48.8.6.

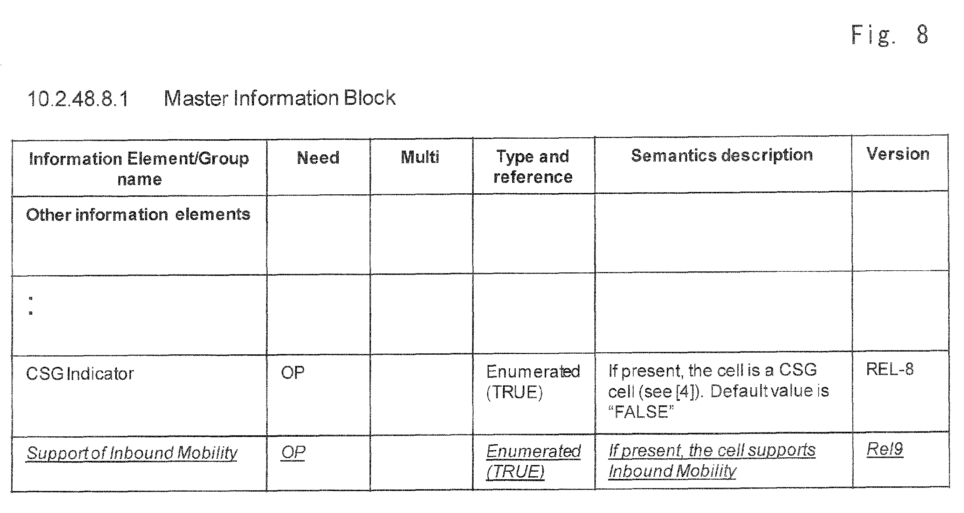

Fig. 8 shows an example of defining new IE "Support of Inbound Mobility" that can be used as support information in Master Information Block (underlined part of Fig. 8). For the details of Master Information Block, refer to 3GPP TS 25.331 "Radio Resource Control (RRC)" v8.7.0 (2009-06), section 10.2.48.8.1.

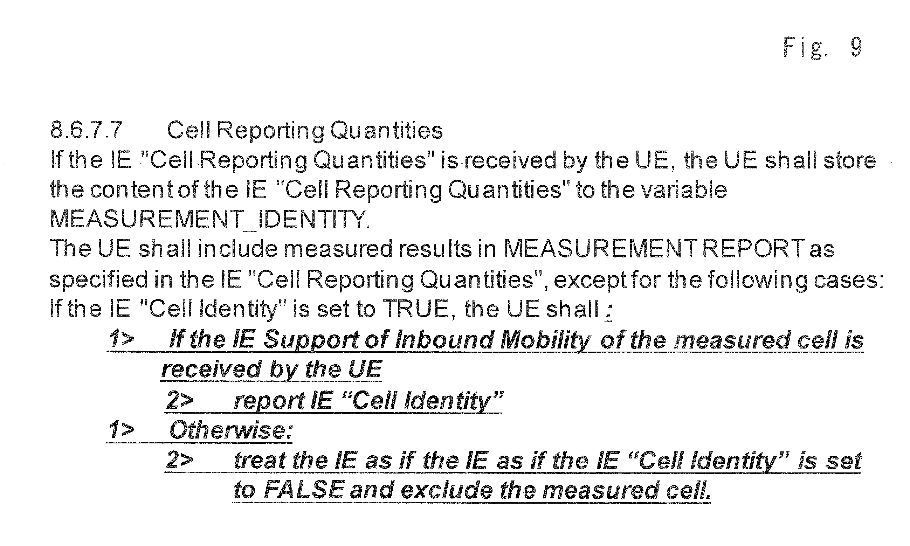

Fig. 9 shows an example of definition of operation of the UE 10 that has received "Support of Inbound Mobility" as new IE. The notation in Fig. 9 conforms to the notation of 3GPP TS 25.331. Specifically, when the UE 10 receives "Support of Inbound Mobility", it transmits a measurement report (RRC: Measurement Report) including cell identification information of the cell. On the other hand, when the UE 10 does not receive "Support of Inbound Mobility", it excludes the cell from candidates of the measurement report. Thus, the UE 10 does not transmit a measurement report about the cell. Note that, for the entire definition of operation shown in Fig. 9, refer to 3GPP TS 25.331 "Radio Resource Control (RRC)" v8.7.0 (2009-06), section 8.6.7.7.

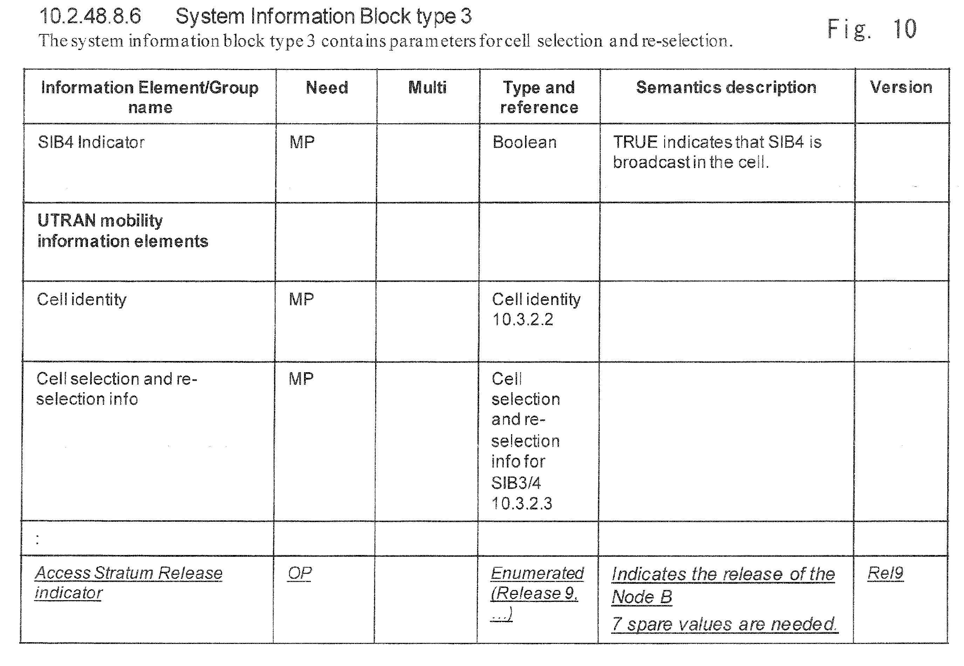

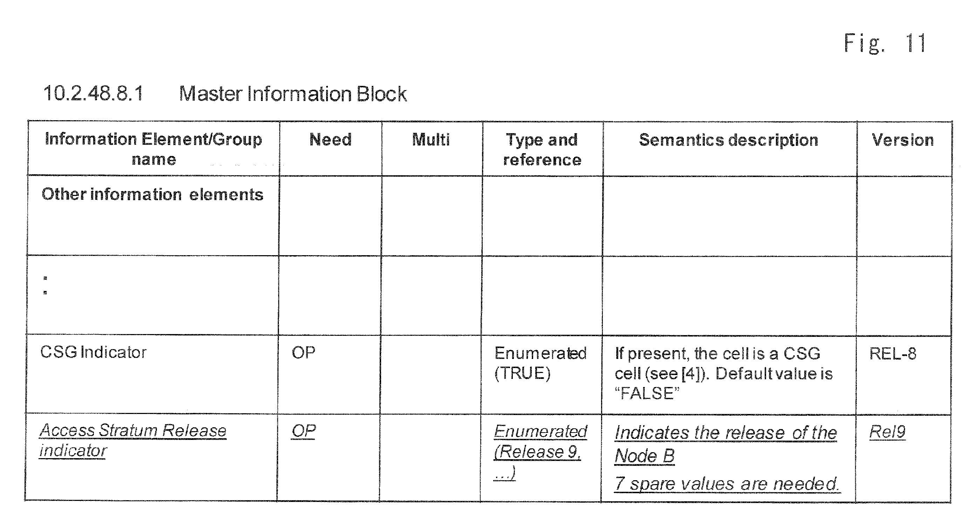

Fig. 10 shows a modification example that adds new IE "Access Stratum Release Indicator" that can be used as support information to definition of "System Information Block type 3" in 3GPP TS 25.331 (underlined part of Fig. 10). "Access Stratum Release Indicator" is a parameter indicating a system version with which a transmission source HNB is compatible, that is, 3GPP Release number. A system version with which a transmission source HNB is compatible can be thereby determined from the content of "Access Stratum Release Indicator" received from the HNB, and whether or not Inbound Mobility is supported can be also determined. Note that, as shown in Fig. 11, "Access Stratum Release Indicator" may be added to Master Information Block (underlined part of Fig. 11).

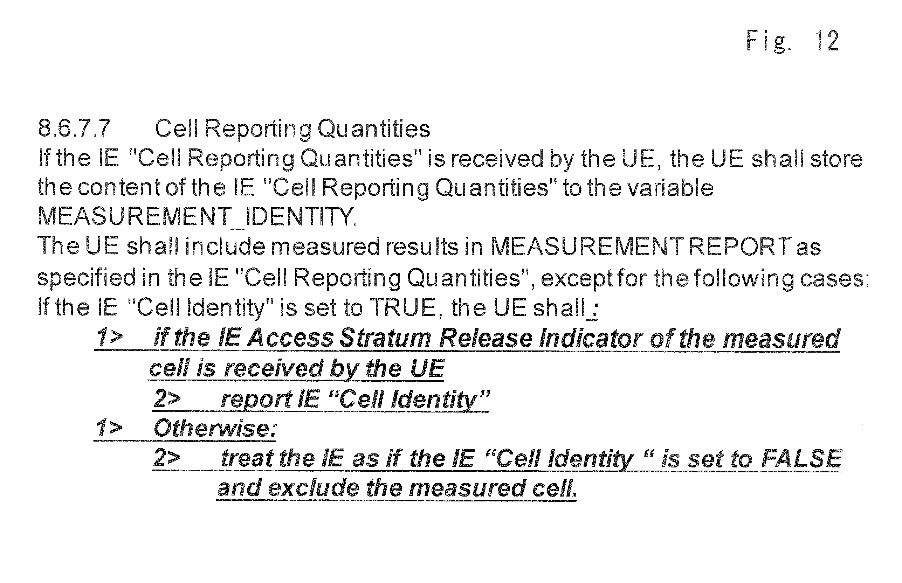

Fig. 12 shows an example of definition of operation of the UE that has received "Access Stratum Release Indicator" as new IE. The notation in Fig. 12 conforms to the notation of 3GPP TS 25.331. Specifically, when "Access Stratum Release Indicator" is set to System Information received from the HNB, the UE transmits a measurement report (RRC: Measurement Report) including cell identification information of the cell. On the other hand, when "Access Stratum Release Indicator" is not set, the UE excludes the cell from candidates of the measurement report. Thus, the UE 10 does not transmit a measurement report about the cell.

Further, by referring to "Access Stratum Release Indicator", a release number to which a transmission source Node B complies with can be determined. Therefore, when "Access Stratum Release Indicator" indicates a version before 3GPP Release 9, the cell may be excluded from candidates of the measurement report. Furthermore, by using "Access Stratum Release Indicator" as support information, compatibility with feature expansion after Release 9 (Release 10, Release 11 etc.) can be easily accomplished. Therefore, "Access Stratum Release Indicator" is applicable to determination as to not only whether or not Inbound Mobility is supported but also whether or not other expanded features which are added as a release progresses are supported.

Hereinafter, configuration examples of the HNB 12 and the UE 10 according to the exemplary embodiment are described. Note that the configuration and the operation of the source control apparatus 11 and the upper network 15 may be the same as those of the RNC 902, the HNB 904A, the core network 903, the HNB GW 905 and the like described earlier with reference to Figs. 55 to 58. Thus, the explanation of those apparatuses is omitted.

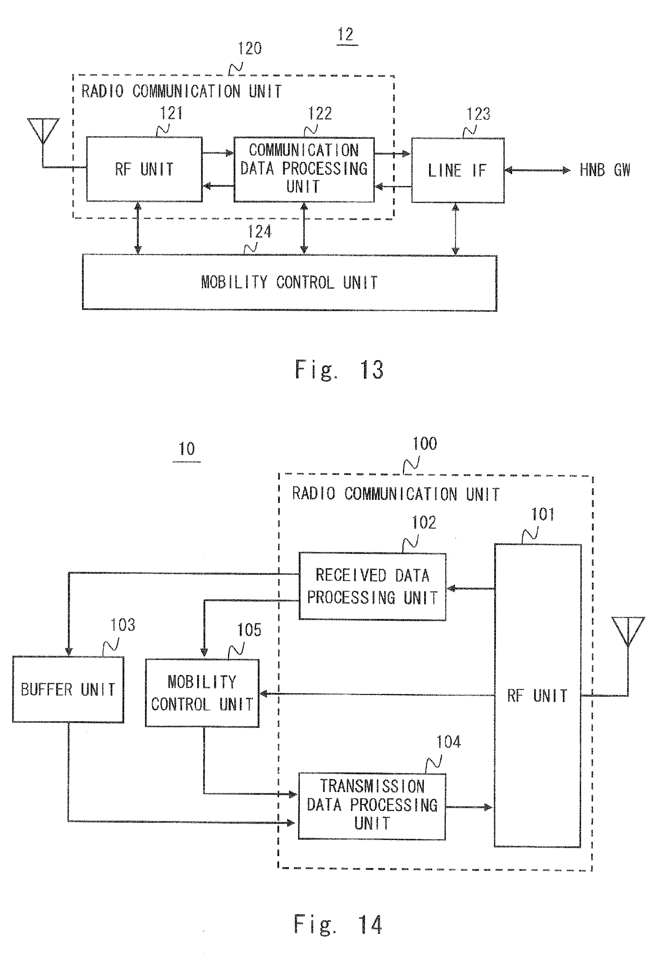

Fig. 13 is a block diagram showing a configuration example of the HNB 12. In Fig. 13, a radio communication unit 120 includes a RF (Radio Frequency) unit 121 and a communication data processing unit 122. The RF unit 121 up-converts a downlink signal supplied from the communication data processing unit 122 from baseband to RF (Radio Frequency) band, performs signal amplification, and then suppliers the RF signal to an antenna. Further, the RF unit 121 supplies, to the communication data processing unit 122, a baseband uplink signal obtained by performing signal amplification and frequency downconversion of an uplink signal received by the antenna.

The communication data processing unit 122 has layer 1 processing and layer 2 (MAC(Medium Access Control)/RLC(Radio Lint Control)) processing functions. The communication data processing unit 122 receives packet data to be transmitted to downlink from the HNB GW 152 through a line interface 123. The communication data processing unit 122 performs segmentation/concatenation of received packet data, RLC layer transmission processing such as RLC re-transmission control, MAC re-transmission control, ARQ (Automatic Repeat reQuest) control, transport format selection, channel coding, symbol mapping and modulation, and thereby generates a baseband downlink signal.

Further, the communication data processing unit 122 performs demodulation, error correction decoding, MAC re-transmission control and RLC layer reception processing of an uplink signal received from the RF unit 121, and thereby reconstitutes a data sequence transmitted from the UE 10. The reconstructed received data sequence is transferred to the HNB GW 152 through the line interface 123.

A mobility control unit 124 performs signaling between the UE 10 and the HNB GW 152 and controls connection switching of the UE 10. Connection switching includes handover during communication and sell re-selection during non-cornmunication. Further, the mobility control unit 124 transmits support information such as "Support of Inbound Mobility" or "Access Stratum Release Indicator" described above by adding it to the downlink signal transmitted from the radio communication unit 120 in order to inform that it supports Inbound Mobility to the target cell (femtocell) 14.

Fig. 14 is a block diagram showing a configuration example of the UE 10. In Fig. 14, a radio communication unit 100 includes a RF unit 101, a received data processing unit 102, and a transmission data processing unit 104. The RF unit 101 receives a downlink signal through an antenna. The received data processing unit 102 reconstitutes received data from the received downlink signal and transmits the data to a buffer unit 103. The received data stored in the buffer unit 103 is rend and used according to its purpose. Further, the transmission data processing unit 104 and the RF unit 101 generate an uplink signal using transmission data stored in the buffer unit 103 and transmits the uplink signal to a base station that forms the source cell 13, the source control apparatus 11 or the target HNB 12.

A mobility control unit 105 controls handover/SRNS relocation and cell re-selection of the UE 10. Specifically, the mobility control unit 105 creates a measurement report of received signals from nearby base stations, transmits it to the source control apparatus 11, and executes handover/SRNS relocation in response to an instruction from the control apparatus 11. Further, during non-communication, the mobility control unit 105 performs autonomous cell re-selection based on the reception quality of radio signals from nearby cells. Further, the mobility control unit 105 may start cell re-selection in response to a request from the network side.

According to a specific example of the mobile communication system 1 described in this exemplary embodiment, the following advantages can be obtained. First, the UE 10 transmits a measurement report about the target cell 14 to the control apparatus 11 on condition that the target cell 14 supports Inbound Mobility. The control apparatus 11 does not determine the target cell 14 as a destination of handover of the UE 10 unless it receives a measurement report including cell identification information about the target cell 14 from the UE 10. Therefore, a connection switching procedure (han.dover/SRNS relocation procedure) which is not likely to be successful is not initiated, thereby suppressing useless signaling.

Second, because the target cell 14 which is not capable of Inbound Mobility is not notified to the source control apparatus 11, useless signaling which occurs when it is notified can be reduced.

Third, no modification is needed for the source control apparatus 11. This is because determination as to whether or not the target cell 14 supports Inbound Mobility is performed by the UE 10.

Fourth, no modification is needed for old HNB which is not capable of Inbound Mobility. This is because only the HNB 12 which is capable of Inbound Mobility needs to transmit support information such as "Support of Inbound Mobility".

Fifth, no modification is needed for UE (old UE) that cannot transmit RRC: Measurement Report inclusive of cell identification information of a femtocell. This is because only the UE that can transmit a measurement report (RNC: Measurement Report) inclusive of cell identification information of a femtocell (the UE that supports 3GPP Release 9 etc.) needs to perform determination of the parameter "Support of Inbound Mobility,".

Sixth, HNB capable of Inbound Mobility and HNB not capable of Inbound Mobility can coexist in one network. This is because modification of features of old HNB and old UE is not needed as described as the fourth and fifth advantages. Particularly, because HNB is a apparatus owned by a user (CPE: Customer Premise Equipment), it is difficult to implement the operation that handover/SRNS relocation to a femtocell is not activated at all until all networks become capable of Inbound Mobility. Therefore, the advantage of permitting coexistence of old HNB is extremely effective for promoting service development of HNB.

Incidentally, processing performed by the target HNB 12 and the UE 10 in relation to recognition of whether or not the target HNB 12 supports Inbound Mobility may be implemented using a computer system including ASPIC (Application Specific Integrated Circuit), DSP (Digital Signal Processor), MPU (Micro Processing Unit), CPU (Central Processing Unit), or a combination of these. Specifically, the computer system may execute a program containing instructions related to the processing procedure of the target HNB 12 or the UE 10 described above using the sequence diagram of Fig. 5 and the flowchart of Fig. 6.

The above program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magnetooptical disks), CD-ROM (Read Only Memory), CD-R , CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

### <Second exemplary embodiment>

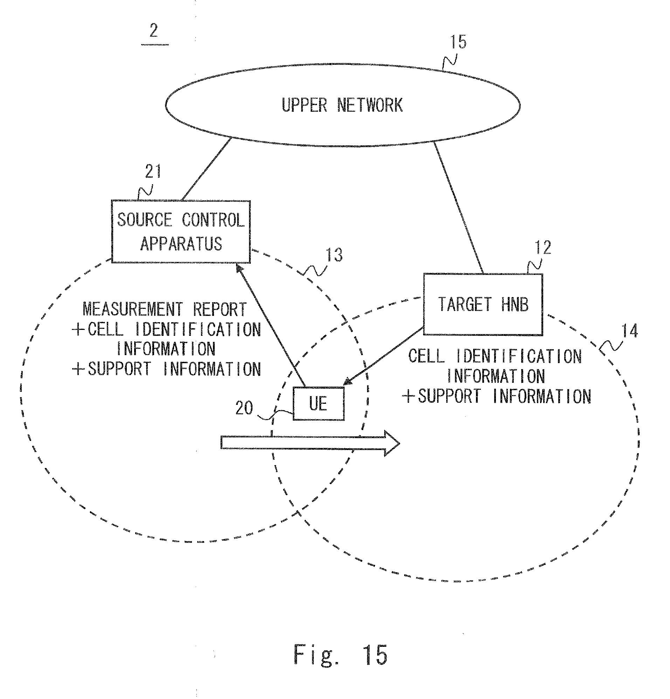

This exemplary embodiment is an alternative mode of the first exemplary embodiment of the invention described above. Fig. 15 is a block diagram of a mobile communication system 2 according to this exemplary embodiment. In the first exemplary embodiment of the invention, the specific example in which the UE (UE 10) performs determination as to whether or not the target cell 14 supports Inbound Mobility is described. On the other hand, in this exemplary embodiment, a source control apparatus 21 performs determination as to whether or not the target cell 14 supports Inbound Mobility. Specifically, a UE 20 transmits support information received from the target HNB 12 to the source control apparatus 21. Then, the source control apparatus 21 determines whether or not the target cell 14 and the target HNB 12 support Inbound Mobility based on the support information received from the UE 20.

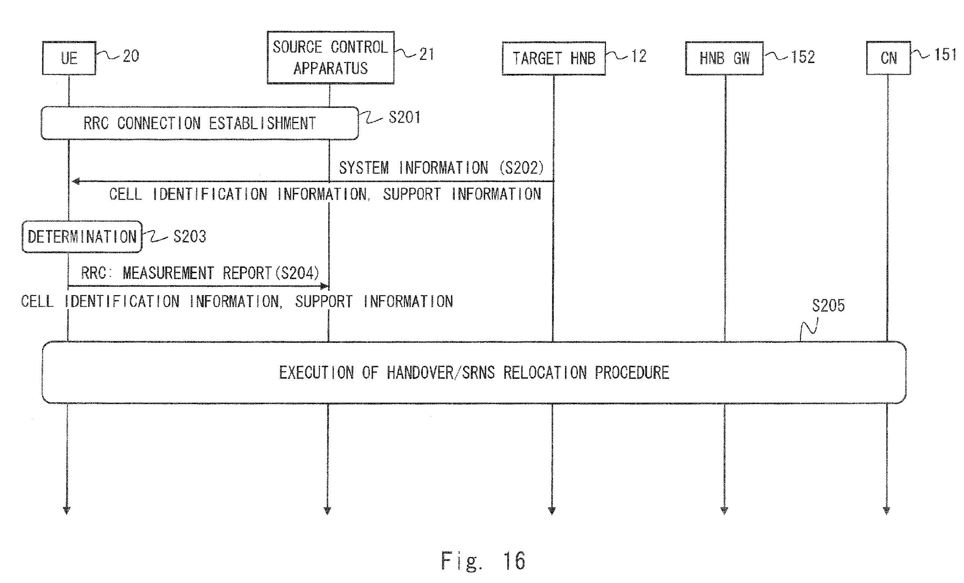

Fig. 16 is a sequence diagram showing a specific example of the handover/SRNS relocation procedure in the exemplary embodiment. In Step S201, RRC (Radio Resource Control) connection is established between the control apparatus 21 and the UE 20. In Step S202, the UE 20 which approaches the coverage area of the target cell 14 receives cell identification information and support information (new IE) from the target HNB 12. Note that Fig. 16 corresponds to the case where the target HNB 12 supports Inbound Mobility. New IE, together with cell identification information, may be included in System Information (specifically. System Information Block type 3 or Master Information Block) as shown in Fig. 16.

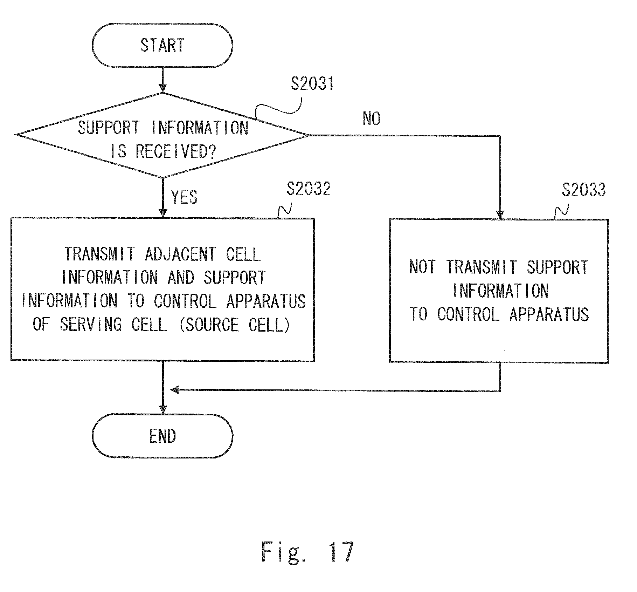

In Step S203, the UE 20 determines as to whether or not support information is received from the target cell 14. Fig. 17 is a flowchart showing a specific example of the determination in Step S203. In S2031 of Fig. 17,the UE20 determines whether or not support information (new IE) is included in broadcast information from the target cell 14. When support information is included (YES in S2031), the UE 20 determines to transmit, to the source control apparatus 21, a measurement report including support information in addition to cell identification information about the target cell 14 (S2032). On the other hand, when support information is not included (NO in S2031), the UE 20 determines to transmit, to the source control apparatus 21, a measurement report including cell identification information about the target cell 14 and not including support information (S2033).

Note that, the UE 20 may determine whether or not to transmit support information to the source control apparatus 21 when it receives the support information from the target cell 14 based on an instruction made by the source control apparatus 21 in relation to transmission of a measurement report.

The explanation continues with reference back to Fig. 16. According to the determination result in Step S203, the UE 20 transmits, to the control apparatus 21, a measurement report including cell identification information about the target cell 14 and support information in Step S204. Finally, in Step S205, the control apparatus 21 decides handover/SRNS relocation to the target cell 14 based on the measurement report including the support information received from the UE 20, and initiates the handover/SRNS relocation procedure.

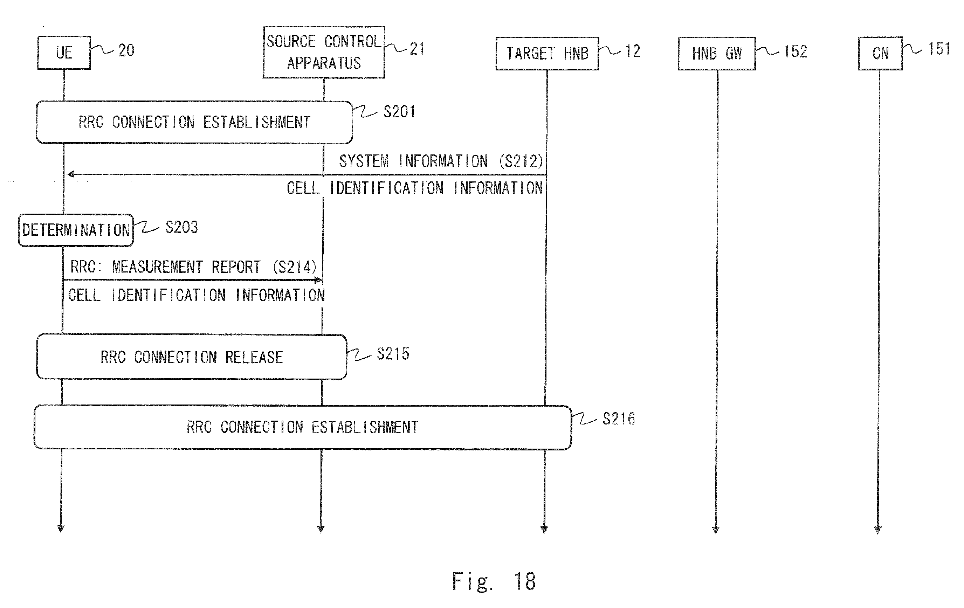

Next, the case where the target HNB 12 does not support Inbound Mobility is described. Fig. 18 is a sequence diagram showing an example of processing when the target HNB 12 does not support Inbound Mobility. Note that, in the processing shown in Fig. 18, the same step as described in Fig. 16 is denoted by the same reference symbol as in Fig. 16.

In Step S212, the UE 20 which approaches the coverage area of the target cell 14 receives cell identification information from the target HNB 12. In this case, support information is not included in broadcast information of the HNB 12. Thus, the UE 20 determines that support information is not received from the target cell 14 (Step S213), and transmit, to the source control apparatus 21, a measurement report including cell identification information and not including support information.

The source control apparatus 21 can recognize whether or not the target cell 14 is capable of Inbound Mobility depending on whether or not support information is included in a report from the UE 20. The source control apparatus 21 can thereby decide whether to execute the handover/SRNS relocation procedure for Inbound Mobility or to reestablish RRC connection by autonomous cell re-selection of the UE 20. In the case of Fig. 18, the source control apparatus 21 disconnects communication (RRC connection) with the UE 20 without initiating handover/SRNS relocation to the target cell 14 that does not support Inbound Mobility (Step S215). The UE 20 thereby performs autonomous cell re-selection and establishes RRC connection with a cell with high communication quality (the target cell 14 in Fig. 18) (Step S216).

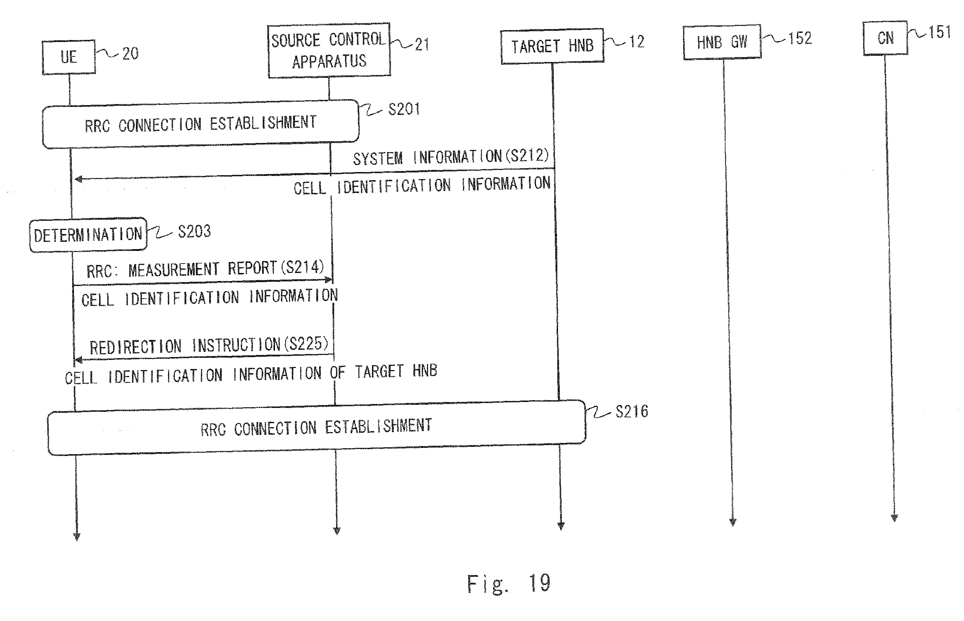

Note that, it is just an example that the source control apparatus 21 disconnects RRC connection upon recognizing that the target cell 14 (target HNB 12) does not support Inbound Mobility. For example, as shown in Fig. 19, the source control apparatus 21 may transmit a message prompting Redirection to the target cell 14 to the UE 20 (Step S225).

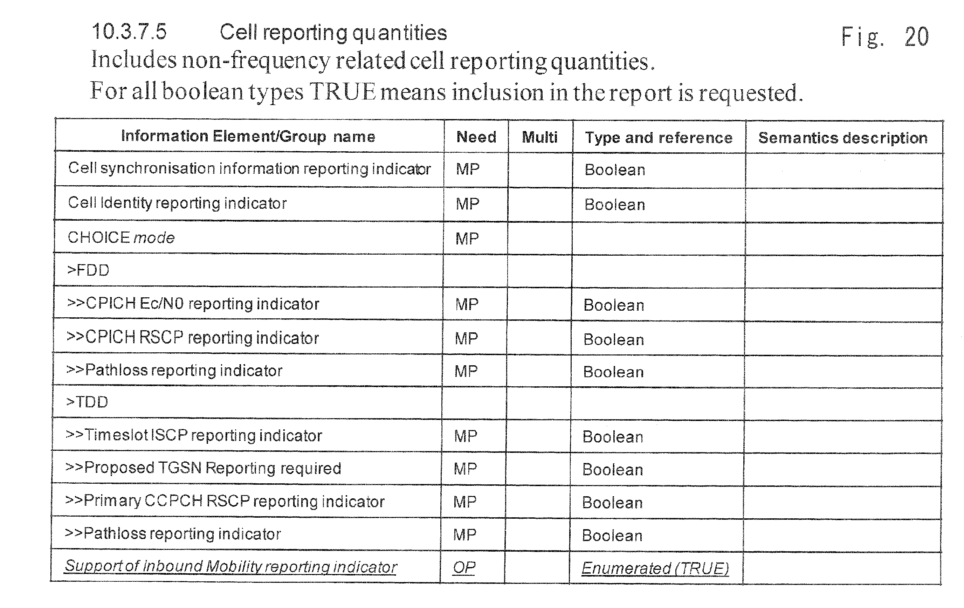

Next, a specific example of transmission setting of support information to the UE 20 is described with reference to Figs. 20 to 22. Fig. 20 shows an example of definition of setting instruction (RRC: Measurement Control) which is made by the source control apparatus 21 for the UE 20 in regard to the reported content of a measurement report. Note that Fig. 20 shows a modification example of a part defining the setting instruction for the content of a measurement report in 3GPP TS 25.331 (underlined part of Fig. 20). When "Support of Inbound Mobility Reporting Indicator" is TRUE, the UE 20 reports the received content of new IE "Support of Inbound Mobility" as support information to the source control apparatus 21. For the details of the content to be reported through a measurement report by the UE 20, refer to 3GPP TS 25.331 "Radio Resource Control (RRC)" v8.7.0 (2009-06), section 10.3.7.5.

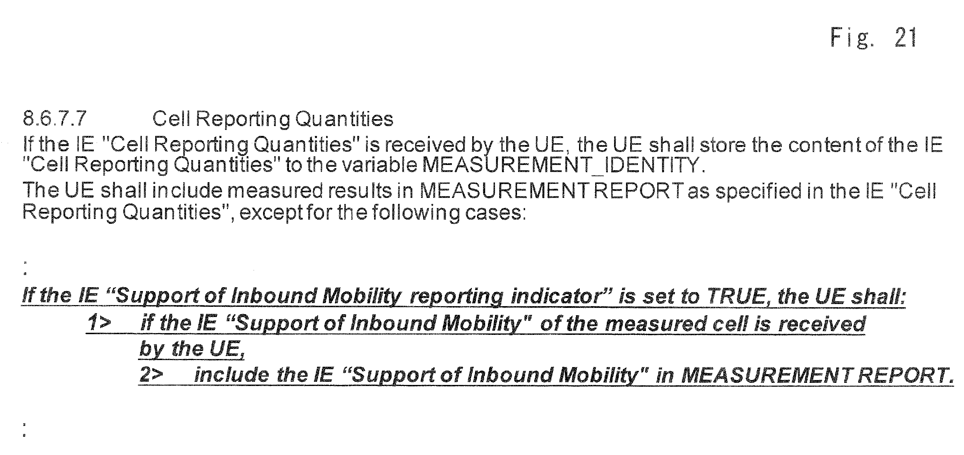

Fig. 21 shows an example of definition of operation of the UE 20 that has received "Support of Inbound Mobility" as new IE. The notation in Fig. 21 conforms to the notation of 3GPP TS 25.331. Specifically, when (i) "Support of Inbound Mobility Reporting Indicator" is TRUE in RRC: Measurement Control received from the source control apparatus 21 and (ii) new IE "Support of Inbound Mobility" is included in System Information received from the target cell 14, the UE 20 transmits a measurement report (RRC: Measurement Report) including "Support of Inbound Mobility". Note that, for the entire definition of operation shown in Fig. 21, refer to 3GPP TS 25.331 "Radio Resource Control (RRC)" v8.7.0 (2009-06), section 8.6.7.7.

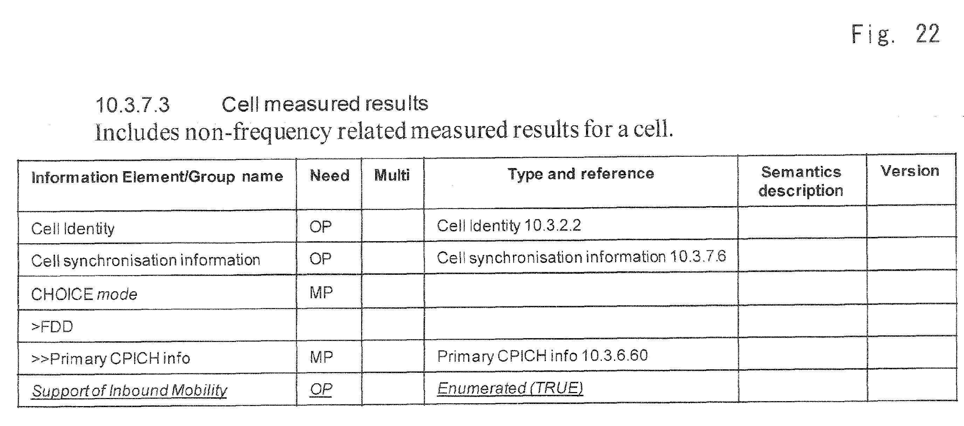

Fig. 22 shows a modification example of a part showing definition of Cell Measured Results included in the measurement report of the UE 20 in 3GPP TS 25.331 (underlined part of Fig. 22). In the example of Fig. 22, "Support of Inbound Mobility" as support information is added to Cell Measured Results. For the details of Cell Measured Results, refer to 3 PUP TS 25.331 "Radio Resource Control (RRC)" v8.7.0 (2009-06), section 10.7.7.3.

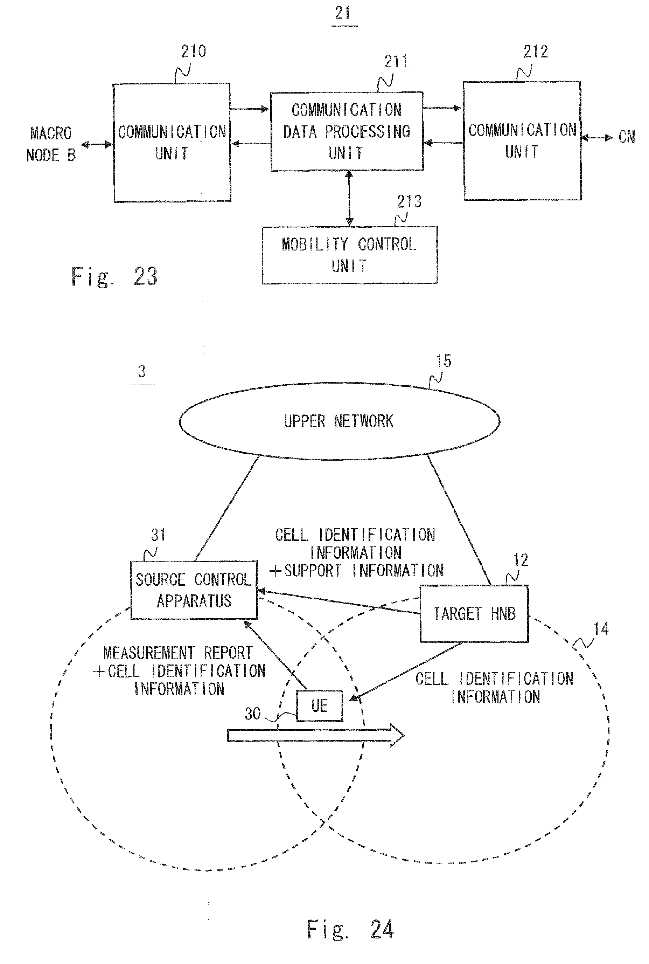

Hereinafter, a configuration example of the source control apparatus 21 according to the exemplary embodiment is described. Fig. 23 is a block diagram showing a configuration example of the source control apparatus 21. Note that Fig. 23 shows the case where the source control apparatus 21 is RNC.

In Fig. 23, a communication unit 210 receives a signal transmitted from a Macro Node B 17. A communication data processing unit 211 transfers the data received from the Macro Node B 17 to a core network (CN) 18 through a communication unit 212. Further, the communication data processing unit 211 acquires transmission data to be transmitted to the UE 20 and the Macro Node B 17 from the communication unit 212 and sends it to the communication unit 210.

A mobility control unit 213 controls handover/SRNS relocation of the UE 20 by performing signaling with the UE 20, the Macro Node B 17 and the upper network 15. The processing in the mobility control unit 213 may be implemented using a computer system including ASIC (Application Specific Integrated Circuit), DIP (Digital Signal Processor), MPU (Micro Processing Unit), CPU (Central Processing Unit), or a combination of these. Specifically, the computer system may execute a program containing instructions related to the handover/SRNS relocation procedure described using the sequence diagrams of Figs. 16, 18 and 19.

According to the exemplary embodiment, instead of the advantages of the first exemplary embodiment of the invention described above or in addition to the advantages of the first exemplary embodiment, the following advantages can be obtained. First, the right to determine whether or not to perform handover by Inbound Mobility can be given to the source control apparatus 21. This is because support information is provided from the UE 20 to the source control apparatus 21.

Second, the source control apparatus 21 can implement connection switching by a procedure different from the handover/SRNS relocation procedure when the UE 20 approaches the target cell 14 that does not support Inbound Mobility. This is because the source control apparatus 21 according to the exemplary embodiment can recognize that the UE 20 approaches the target cell 14 that does not support Inbound Mobility. For example, as shown in Figs. 18 and 19, the source control apparatus 21 may prompt the UE 20 to execute cell re-selection.

Third, because the source control apparatus 21 can acquire whether nearby HNBs are capable of Inbound Mobility or 3GPP Release which nearby HNBs support, the Source RAN can store the HNBs located nearby in the form of database for use in construction of Self Optimizing Network (SON).

### <Third exemplary embodiment>

This exemplary embodiment is an alternative mode of the second exemplary embodiment of the invention described above. Fig. 24 is a block diagram of a mobile communication system 3 according to this exemplary embodiment. In the second exemplary embodiment of the invention, the example in which, after the UE 20 receives support information broadcasted from the target HNB 12, the UE 20 transmits the support information to the source control apparatus 21 is described. On the other hand, in this exemplary embodiments, a network listening function, is incorporated into a source control apparatus 31 or a base station managed by the source control apparatus 31. The network listening function is a function of receiving a radio signal from an adjacent cell. The source control apparatus 31 can thereby receive support information broadcasted from the target HNB 12 directly without through a UE 30. Further, the UE 30 does not need to have the function of receiving support information and transmitting it to the control apparatus 31.

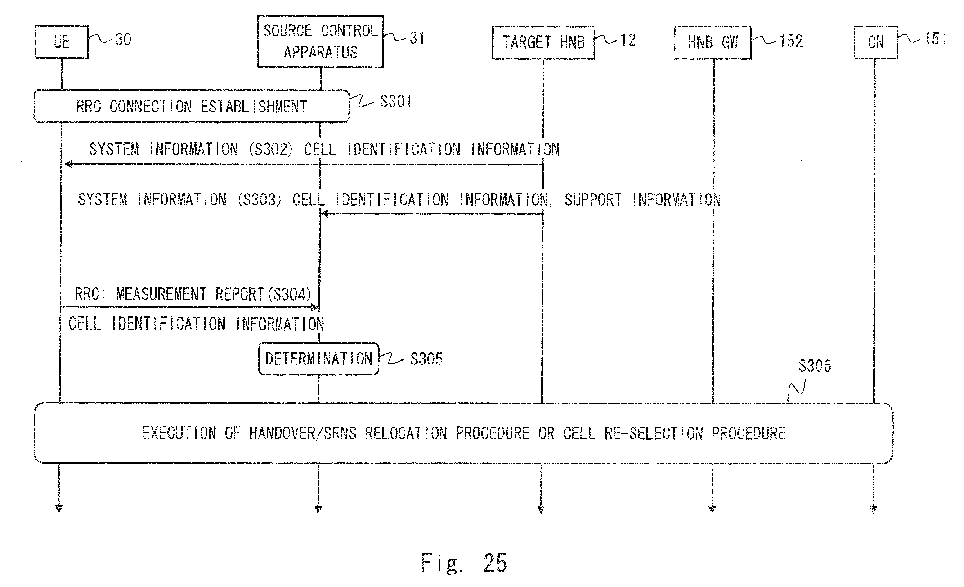

Fig. 25 is a sequence diagram showing a specific example of the handover/SRNS relocation procedure in this exemplary embodiment. Note that Fig. 25 corresponds to the case where the target HNB 12 supports Inbound Mobility and transmits support information. In Step S301, RRC (Radio Resource Control) connection is established between the control apparatus 31 and the UE 30. This is the same as S201 of Fig. 16.

In Step S302, the UE 30 receives a radio signal from the target HNB 12 and acquires cell identification information. Note that the UE 30 does not need to acquire support information.

In Step S303, the source control apparatus 31 receives cell identification information and support information from the target HNB 12. Note that, as described above, the source control apparatus 31 may receive support information which a base station under its control has received from the target HNB 12.

In Step S304, the UE 30 transmits a measurement report and cell identification information about the target cell 14 to the control apparatus 31. Note that the UE 30 does not need to transmit support information to the control apparatus 31.

In Step S305, the source control apparatus 31 determines whether the target cell 14 that has been reported by the measurement report from the UE 30 supports Inbound Mobility or not. The determination is made using the support information received by the source control apparatus 31 or a base station under control of the source control apparatus 31.

When the target cell 14 supports Inbound Mobility, the source control apparatus 31 initiates the handover/SRNS relocation procedure. On the other hand, when the target cell 14 does not support Inbound Mobility, the source control apparatus 31 prompts the UE 30 to perform cell re-selection without initiating a handover procedure (Step S306).

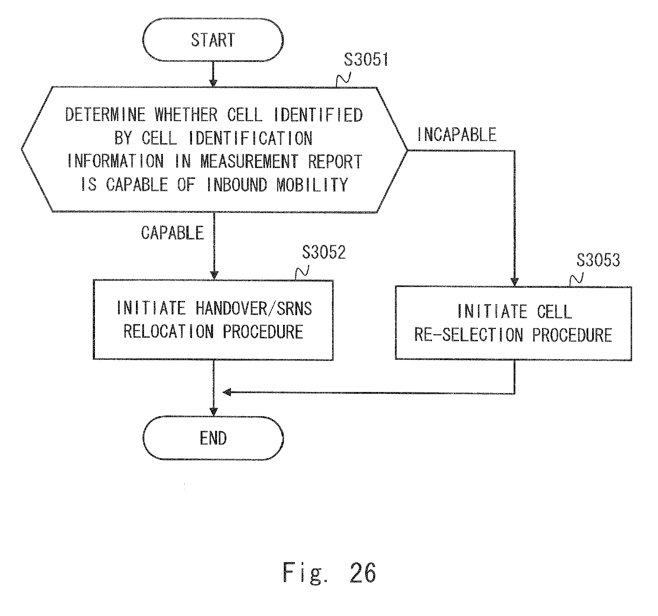

Fig. 26 is a flowchart showing a specific example of the determination in Step S305. In S3051, the source control apparatus 31 determines whether or not the target cell 14 identified by cell identification information in the measurement report received from the UE 30 supports Inbound Mobility based on support information. The support information is received by the source control apparatus 31 or a base station under control of the source control apparatus 31. When the target cell 14 supports Inbound Mobility, the source control apparatus 31 determines to initiate the handover/SRNS relocation procedure (Step S3052). On the other hand, when the target cell 14 does not support Inbound Mobility, the source control apparatus 31 determines to initiate another procedure in place of the handover/SRNS relocation procedure, such as a procedure to prompt the UE 30 to perform cell re-selection, for example (Step S3053).

According to the exemplary embodiment, in addition to the advantages of the second exemplary embodiment of the invention described above, the following advantages can be obtained. Specifically, in the exemplary embodiment, there is an advantage that it is not necessary for the UE 30 to have the function of transferring support information because the source control apparatus 31 can acquire support information without through the UE 30. Thus, the UE 30 may have the same function as the UE 906 described earlier with reference to Figs. 55 to 58.

### <Fourth exemplary embodiment>

In the first to third exemplary embodiments described above, the example in which the UE (10, 20, 30) or the source control apparatus (11, 21, 31) recognizes the Inbound Mobility support status of the target HNB 12 based on support information transmitted from the target HNB (12) is described. On the other hand, in this exemplary embodiment, an example in which the source control apparatus can recognize the Inbound Mobility support status of the target HNB without transmission of support information from the target HNB is described.

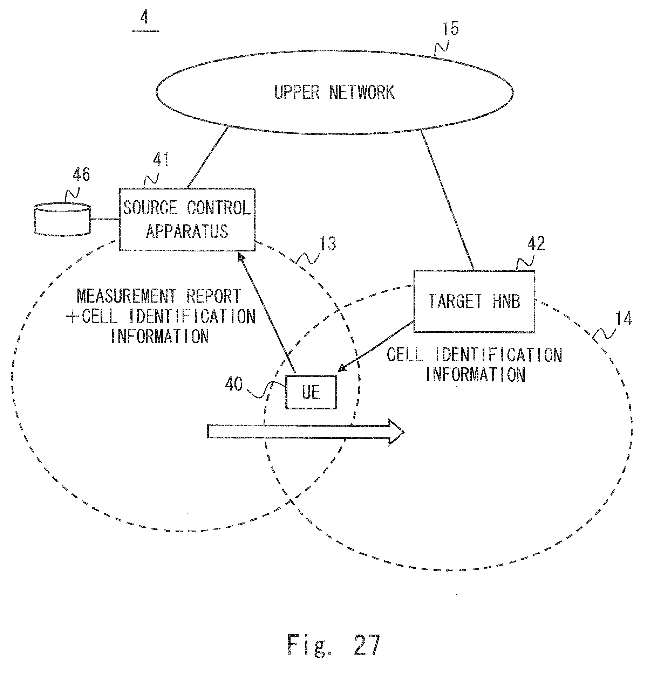

Fig. 27 is a configuration example of a mobile communication system 4 according to the exemplary embodiment. A UE 40 and a target HNB 42 may be the same as the UE 906 and the HNB 904 described earlier with reference to Figs. 55 to 58. Thus, the target HNB 42 does not need to transmit support information. Further, the UE 40 only needs to transmit a measurement report including cell identification information about the target cell 14 to a source control apparatus 41 and does not need to transmit support information.

The source control apparatus 41 determines whether or not the target HNB 42 corresponding to cell identification information reported by a measurement report from the UE 40 supports Inbound Mobility by referring to a database stored in a recording apparatus 46.

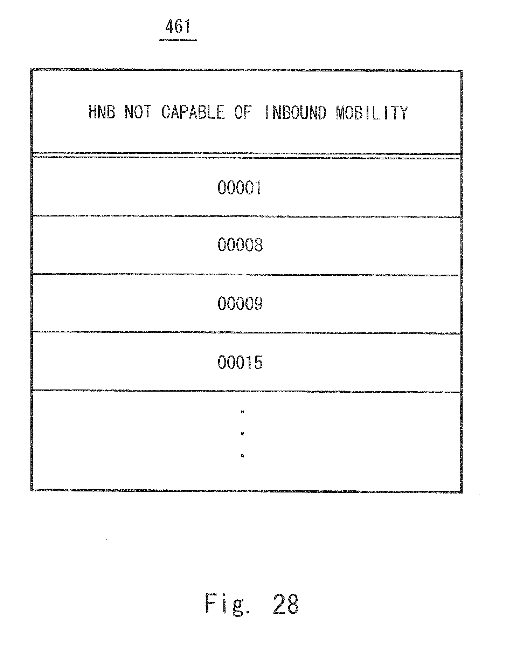

The database stored in the recording apparatus 46 is a database that stores information as to whether the target cell 14 located adjacent to the source cell 13 supports Inbound Mobility or not. Fig. 28 shows a specific example of a database 461 stored in the recording apparatus 46. The database 461 shown in Fig. 28 contains a list of cell identification information (CGI or CI) about femtocells and HNB not capable of Inbound Mobility.

Note that the layout of the database may vary as appropriate. For example, the database (recording apparatus 46) may be placed locally for each source control apparatus 41 as shown in Fig. 27. Further, the database may be shared among a plurality of source control apparatuses and, in this case, the database (recording apparatus 46) may be placed in the upper network 15.

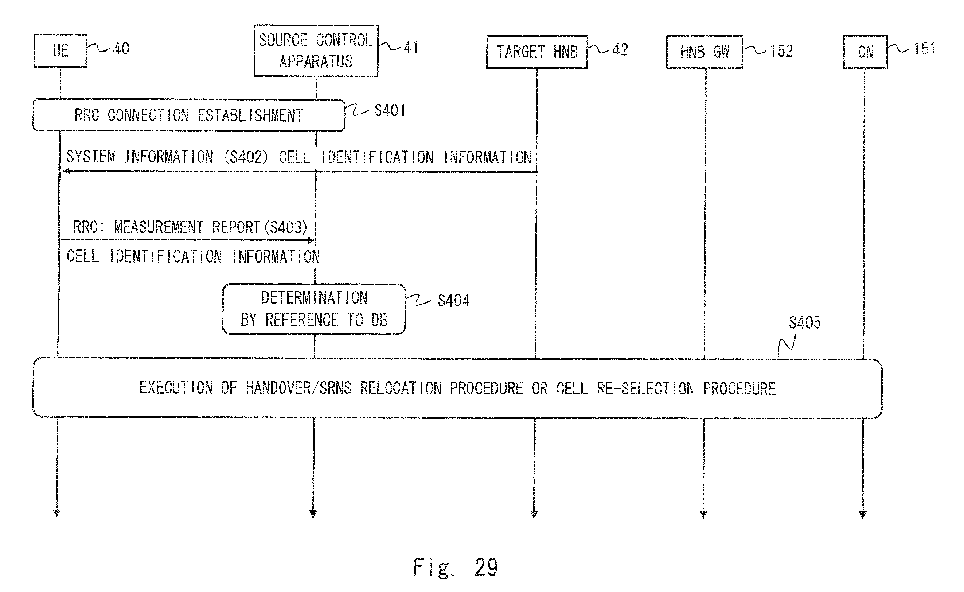

Next, a specific example of operation to initiate the handover/SRNS relocation procedure based on a reference result of the database stored in the recording apparatus 46 is described with reference to the sequence diagram of Fig. 29. Steps S401 to S403 are the same as Steps S901 to S903 of Fig. 57. Specifically, in Step S401, RRC connection is established between the control apparatus 41 and the UE 40. In Step S402, the UE 40 receives a radio signal from the target HNB 42 and acquires cell identification information. In Step S403, the UE 40 transmits a measurement report including cell identification information about the target cell 14 to the control apparatus 41.

In Step S404, the source control apparatus 41 compares the cell identification information reported from the UE 40 with identification information stored in the database and determines whether or not the target HNB 42 supports Inbound Mobility. When the target HNB 42 supports Inbound Mobility, the source control apparatus 41 initiates the handover/SRNS relocation procedure. On the other hand, when the target HNB 42 does not support Inbound Mobility, the source control apparatus 41 initiates another procedure instead of the handover/SRNS relocation procedure (Step S405). For example, the source control apparatus 41 may perform release (disconnection) of the RRC connection or redirection instruction for the UE 40 so as to prompt the UE 40 to perform cell re-selection.

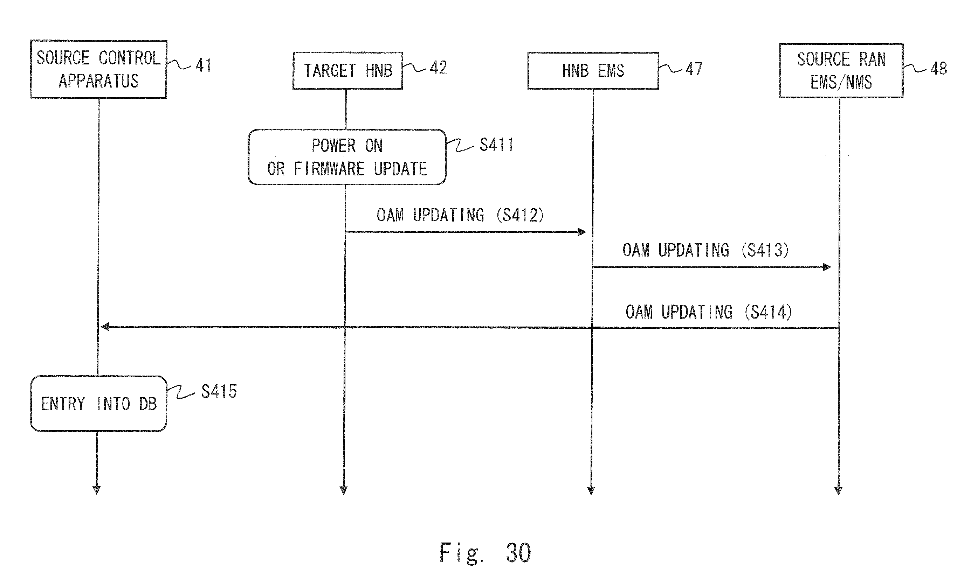

Next, an example of an entry and update method of a database stored in the recording apparatus 46 is described. For example, entry into the database and update of the database may be made by an operator of a telecommunications carrier. Fig. 30 is a sequence diagram showing a specific example of an entry and update procedure by an operator. In Fig. 30, a HNB EMS (Element Management System) 47 is a system for monitoring and controlling the HNB 42 that is connected under control of the HNB GW 152. A Source RAN EMS/NMS (Network Management System) 48 is a system for monitoring and controlling apparatuses (Macro Node B, RNC etc.) of Source RAN.

In Step S411 of Fig. 30, power ON or firmware update is performed in the target HNB 42. In Step S412, upon occurrence of a given event such as power ON or firmware update, the HNB 42 transmits a message (OAM UPDATING message) to the EMS 47. The message includes firmware version information for determining the Inbound Mobility support status of the HNB 42 and the like. The EMS 47 transfers the received message to the EMS/NMS 48 (Step S413).

The EMS/NMS 48 or an operator of the EMS/NMS 48 determines whether or not the HNB 42 supports Inbound Mobility based on the received message from the EMS 47. Then, according to the determination, the EMS/NMS 48 transmits a message for updating the database to the source control apparatus 41 (Step S414). Finally, in Step S415, the source control apparatus 41 updates the database stored in the recording apparatus 46.

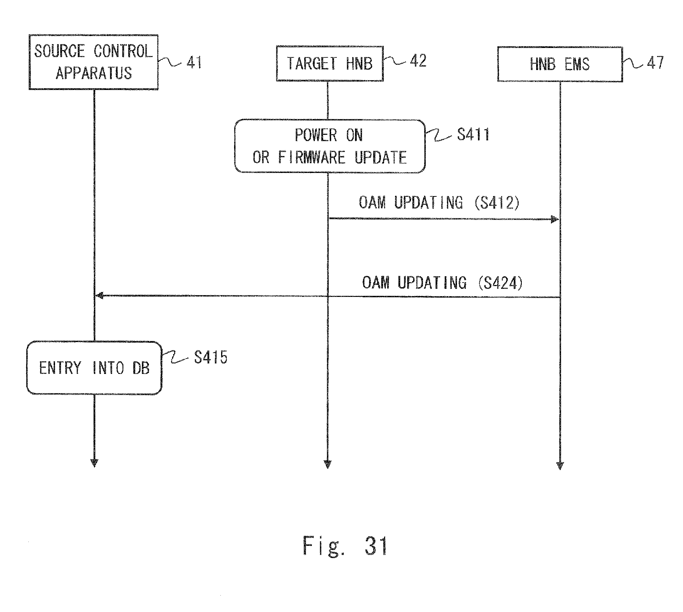

Fig. 31 is a sequence diagram showing another example of entry and update procedure by an operator. Fig. 31 shows the case where the source control apparatus 41 is HNB and is monitored by the EMS 47, like the target HNB 42. In the example of Fig. 31, upon occurrence of a given event such as power ON or firmware update (Step S411), the target HNB 42 transmits a message. Then, when the message is received by the EMS 47 (Step S412), the EMS 47 transmits a message for updating the database to the source control apparatus 41 (Step S424). Note that transmission of the database update message from the EMS 47 to the source control apparatus 41 may be performed automatically by the EMS 47 or performed in response to operation by an operator who has confirmed the message from the target HNB 42.

According to the exemplary embodiment, the right to determine whether or not to perform handover by Inbound Mobility can be given to the source control apparatus 41 as in the second exemplary embodiment of the invention described above. This is because the source control apparatus 41 has information about the Inbound Mobility support status of the target cell 14.

Further, according to the exemplary embodiment, instead of the advantages of the first to third exemplary embodiments of the invention or in addition to the advantages of the first to third exemplary embodiments, the following advantages can be obtained. Specifically, in this exemplary embodiment, because the source control apparatus 41 can autonomously determine whether or not the target cell 14 supports Inbound Mobility, it is not necessary for the UE 40 and the HNB 42 to have additional functions. Therefore, the UE 40 and the HNB 42 can have the same functions as the UE 906 and the HNB 904 described earlier with reference to Figs. 55 to 58.

### <Fifth exemplary embodiment>

In this exemplary embodiment, an alternative example of the above-described fourth exemplary embodiment of the invention is described. In the above-described fourth exemplary embodiment of the invention, the example in which the entry into and update of the database stored in the recording apparatus 46 are performed using the OAM interface is described. In this exemplary embodiment, an example in which the entry into and update of the database are performed based on failure histories of connection switching to the target cell 14 is described.

Specifically, there is a case where, after the source control apparatus 41 initiates handover/SRNS relocation of the UE 10 to the target cell 14, handover/SRNS relocation fails for some reasons on the target side. In this case, there is case where a failure notification caused by Inbound Mobility incapability of the target cell 14 (or the target HNB 42) reaches the source control apparatus 41 as shown in Step S948 of Fig. 59 and Step S966 of Fig. 60. When the source control apparatus 41 receives such a failure notification due to the reason that the target cell 14 does not support Inbound Mobility, the source control apparatus 41 enters the target HNB 42, as one of HNBs not supporting Inbound Mobility, into the database of the recording apparatus 46.

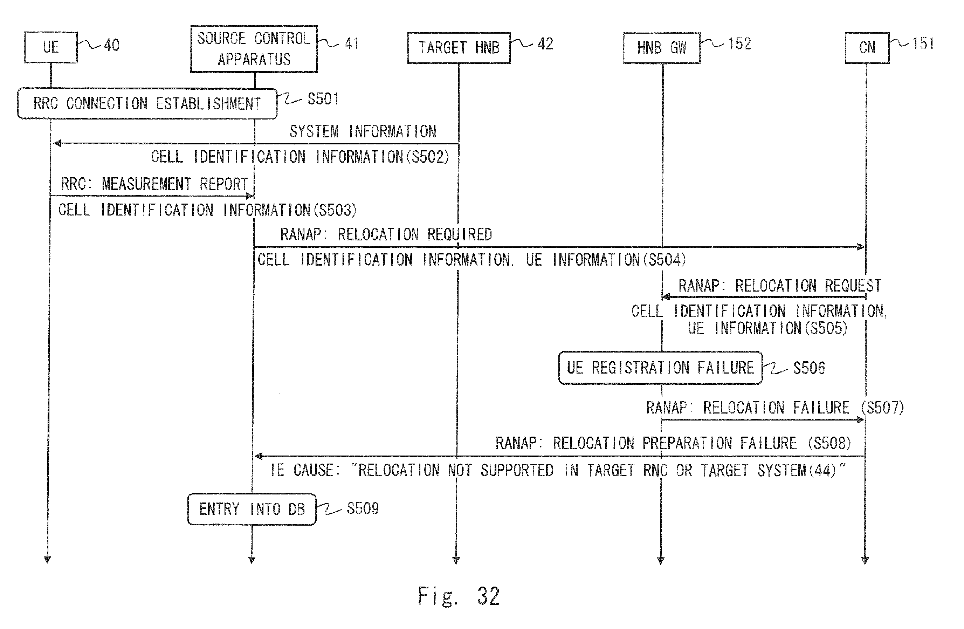

Fig. 32 is a sequence diagram showing a specific example of a procedure to update a database of the recording apparatus 46. Fig. 32 shows the case where the source control apparatus 41 is RNC. Step S501 to S508 of Fig. 32 are the same as Steps S901 to S905 and S946 to S948 shown in Fig. 59. In Step S509 of Fig. 32, the source control apparatus 41 refers to the cause of failure attached to the failure notification (RANAP: Relocation Failure) received in Step S508. Then, when the cause of failure is that the target cell 14 does not support Inbound Mobility, the source control apparatus 41 enters the HNB 42 corresponding to the target cell 14 into the database.

Whether or not the cause of failure is that the target cell 14 does not support Inbound Mobility can be determined by Cause IE included in RANAP: Relocation Failure, for example. When the target cell 14 does not support Inbound Mobility, "Relocation not supported in Target RNC or Target system (44)" is set to Cause IE. For the details of Cause IE, refer to 3GPP TS 25.413 "UTRAN Iu interface Radio Access Network Application Part (RANAP) signalling" V8.3.0 (2009-06), section 8.6.3 "Unsuccessful Operation" and section 9.2.1.4 "Cause".

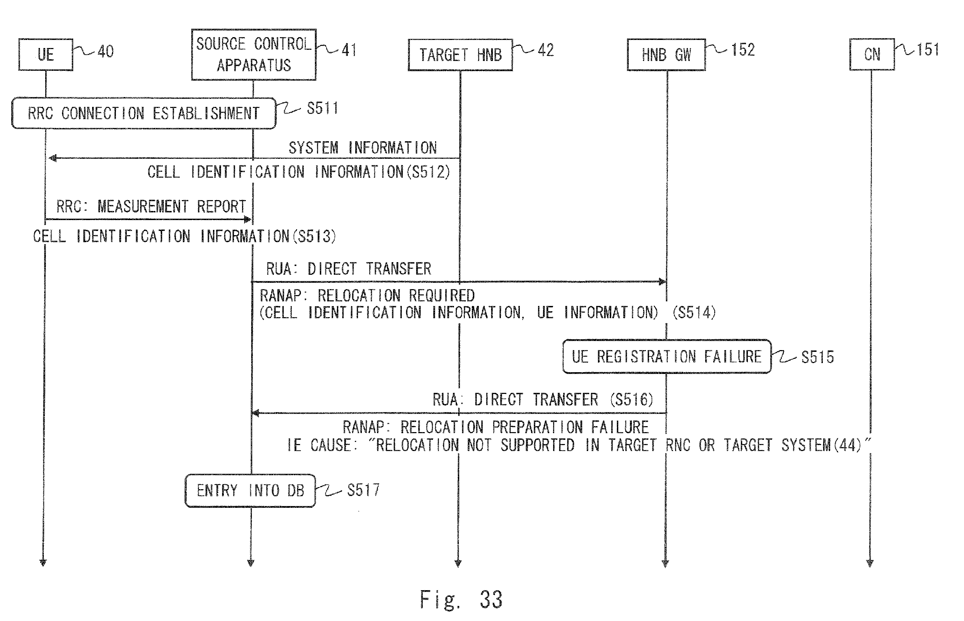

Fig. 33 is also a sequence diagram showing a specific example of a procedure to update a database of the recording apparatus 46. Fig. 33 shows the case where the source control apparatus 41 is HNB. Steps S511 to S516 of Fig. 33 arc the same as Steps S921 to S924 and S965 to S966 shown in Fig. 60. In Step S517 of Fig. 33, the source control apparatus 41 refers to the cause of failure attached to the failure notification (RANAP: Relocation Failure) received in Step S516. Then, when the cause of failure is that the target cell 14 does not support Inbound Mobility, the source control apparatus 41 enters the HNB 42 corresponding to the target cell 14 into the database.

As described in this exemplary embodiment, by performing entry into the database according to the past trial and failure of the handover/SRNS relocation procedure by the source control apparatus 41, the reliability of the database stored in the recording apparatus 46 can be improved. Further, there is also an advantage that it is not necessary to make modification to the OAM interface compared with the method of updating the database by the OAM described in the fourth exemplary embodiment.

Incidentally, the situation where the HNB 42 is not capable of Inbound Mobility is not permanent, and the HNB 42 becomes capable of Inbound Mobility by version update of firmware. However, the HNB 42 is user-owned equipment. Therefore, the version update of firmware of the HNB 42 is not forcibly performed at a time from the network side but is expected to be performed as appropriate at user's convenience on the initiative of a user. Taking such use conditions of the HNB 42 into account, if entry into the database that the HNB 42 is not capable of Inbound Mobility is made permanently on the basis that handover/SRNS relocation to the target cell 14 has failed once in the past, firmware update performed after that cannot be reflected, which is disadvantageous. It is therefore preferred to provide a scheme to invalidate information stored in the database. Hereinafter, specific examples 1 to 3 of a scheme to invalidate information stored in the database are described.

### <Specific example 1: Invalidation by timer control>

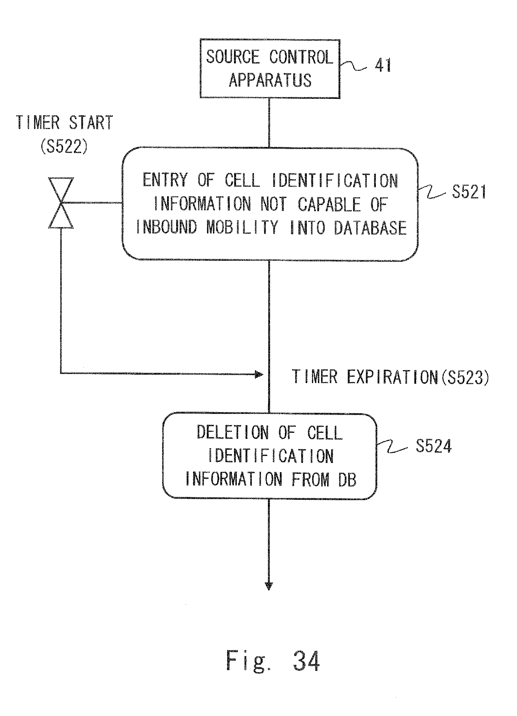

Fig. 34 is a sequence diagram showing a specific example of invalidation by timer control. In Step S521, the source control apparatus 41 enters cell identification information about the target cell 14 not capable of Inbound Mobility into the database. In Step S522, a timer for measuring the elapsed time since entry into the database starts. In Step S523, it is determined that a timer expires, i.e., that a predetermined time has elapsed. In Step S524, in response to timer expiration, the source control apparatus 41 invalidates the relevant cell identification information. Specifically, the cell identification information may be deleted from the database.

Thus, information indicating that the HNB 42 does not support Inbound Mobility is present in the database as a valid entry only during the period when the timer is valid. Accordingly, the handover/SRNS relocation procedure is tried again for the HNB 42 corresponding to the entry deleted upon timer expiration. At this time, when the HNB 42 remains incapable of Inbound Mobility, entry into the database is performed once again upon occurrence of another Relocation Failure.

In this manner, the source control apparatus 412 can reflect the version update of the HNB 42 done by a user on the database. Further, according to the technique, there is no need to make modification to the OAM interface of the source control apparatus 41 in order to perform invalidation of a database entry.

### <Specific example 2: Invalidation by handover/SRNS relocation trial number of times>

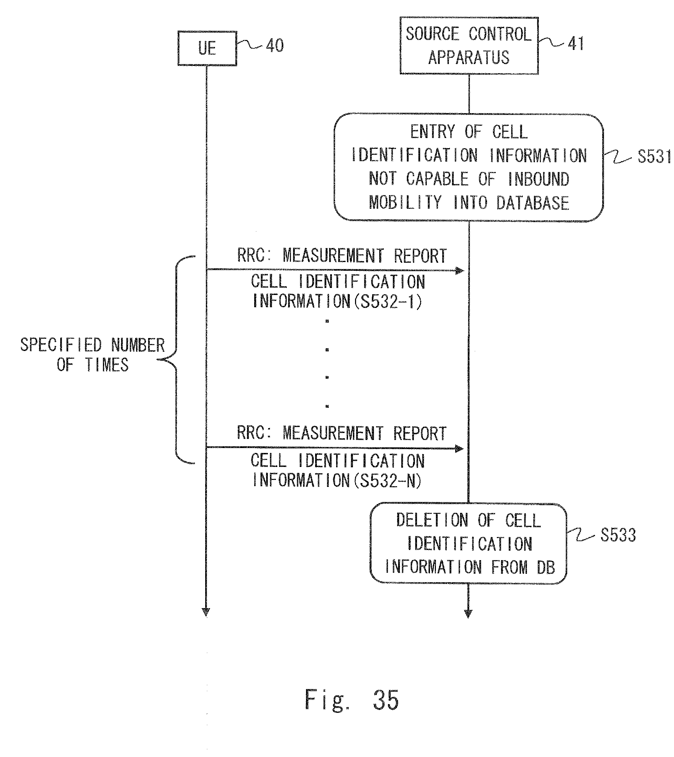

Fig. 35 is a sequence diagram showing a specific example of invalidation by handover/SRNS relocation trial number of times. In Step S531, the source control apparatus 41 enters cell identification information about the target cell 14 not capable of Inbound Mobility into the database. In Step S532-1 to S532-N, the source control apparatus 41 counts the number of times handover/SRNS relocation to the target cell 14 is inhibited based on the information stored in the database. In Step S533, when the count of the number of times handover/SRNS relocation is inhibited reaches a predetermined number N, the source control apparatus 41 invalidates the relevant cell identification information by deleting it from the database.

In this technique also, it is possible to reflect the version update of the HNB 42 done by a user on the database, just like the specific example 1. Further, there is no need to make modification to the OAM interface of the source control apparatus 41 in order to perform invalidation of a database entry.

### <Specific example 3: Invalidation by OAM>

Invalidation of a database entry may be performed using the OAM interface, in the same manner as described earlier with reference to Figs. 30 and 31. According to this technique, it is not necessary to wait for the timer expiration or the specified handover/SRNS relocation trial number of times. There is thus an advantage that it is possible to instantaneously reflect the fact that the HNB 42 becomes capable of Inbound Mobility by firmware version update on the database.

### <Sixth exemplary embodiment>

In this exemplary embodiment, another alternative example of the above-described fourth exemplary embodiment of the invention is described. In the above-described fourth exemplary embodiment of the invention, the example in which the entry into and update of the database stored in the recording apparatus 46 are performed using the OAM interface is described. In this exemplary embodiment, an example in which the entry into and update of the database are performed by exchanging a message by RNC-HNB interface or HNB-HNB interface is described.

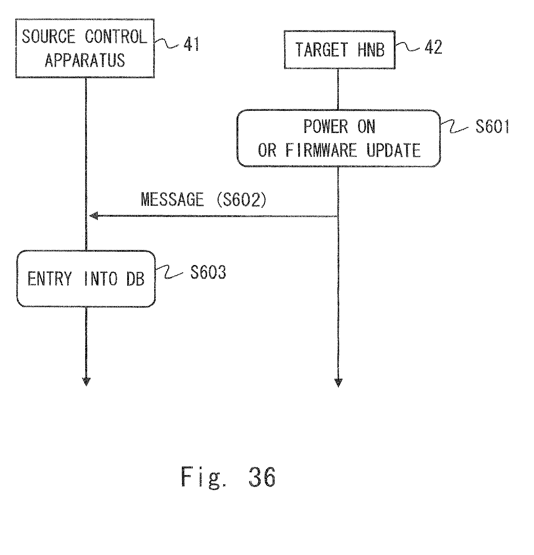

Fig. 36 is a sequence diagram showing an example that transmits and receives a message upon modification of a network configuration and thereby updates a database entry. In the example of Fig. 36, upon occurrence of a given event such as power ON or firmware update (Step S601), the HNB 42 transmits a message to the source control apparatus 41 through RNC-HNB or HNB-HNB interface (S602). When receiving the message, the source control apparatus 41 updates a database entry (Step S603).

Further, when the source control apparatus 41 is RNC, the following step may be added. Specifically, when a new Macro Node B is placed, the RNC, which is the source control apparatus 41, may perform communication with HNB located near the Macro Node B through RNC-HNB interface and thereby collect Inbound Mobility capability information.

According to the database entry update technique described above, the source control apparatus 41 can acquire the latest status of Inbound Mobility capability of the HNB 42 in advance.

### <Seventh exemplary embodiment>

In this exemplary embodiment, an example that checks Inbound Mobility capability of the target HNB 42 by transmitting and receiving a message through RNC-HNB interface or HNB-HNB interface is described. In the above-described sixth exemplary embodiment, the example that performs message transmission and reception upon modification to a network configuration for the purpose of updating a database entry is described. In this exemplary embodiment, a procedure to check Inbound Mobility capability by transmitting and receiving a message at the start of a control procedure for connection switching of the UE 40 is described.

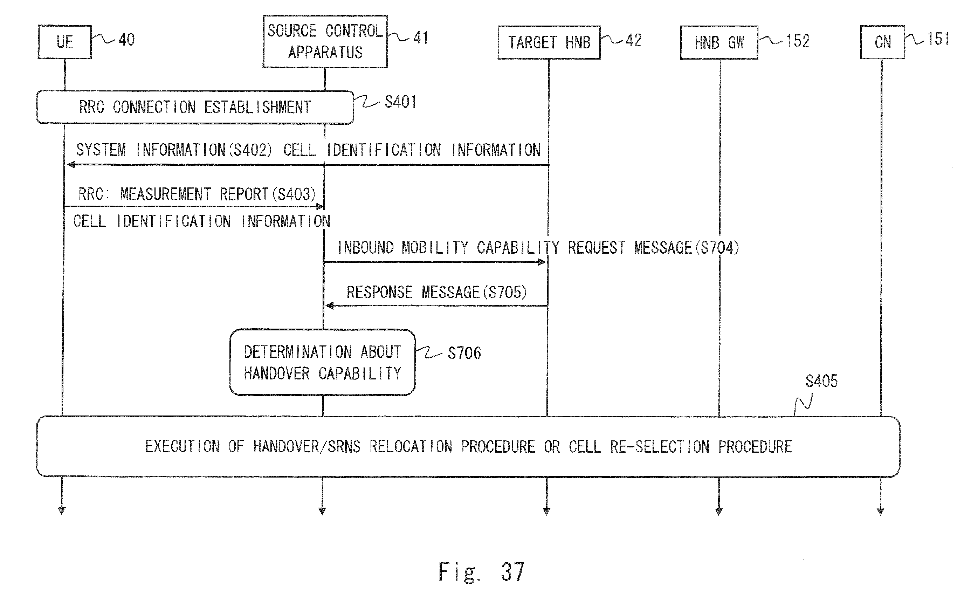

Fig. 37 is a flowchart showing a processing procedure according to the exemplary embodiment. Steps S401 to S403 and S405 of Fig. 37 are the same as Steps of the same reference symbols shown in Fig. 32 according to the fourth exemplary embodiment.

In Step S704 of Fig. 37, upon receiving a measurement report (RRC: Measurement Report) from the UE 40, the source control apparatus 41 transmits Inbound Mobility capability request message to the target HNB 42. The transmission of the message is performed using RNC-HNB interface when the source control apparatus 41 is RNC, and performed using HNB-HNB interface when the source control apparatus 41 is HNB.

In Step S705, the target HNB 42 transmits a response message to the request message to the source control apparatus 41. The response message includes information indicating Inbound Mobility capability of the target HNB 42. In Step S706, the source control apparatus 41 determines which of the handover/SRNS relocation procedure to the target HNB 42 and an alternative procedure (procedure to prompt cell re-selection) to be initiated based on the content of the response message.

Inbound Mobility capability of the target HNB in the content of the response message may be indicated by one Bit of IE of Cell Capability Container FDD in TS25.423 Version 8.5.0 (2009-06), Chapter 9.2.2.D. In this case, Inbound Mobility capability may be represented by TRUE/FALSE of the Bit.

According to the exemplary embodiment, at the start of control procedure for handover/SRNS relocation of the UE 40, Inbound Mobility capability of the target HNB 42 can be checked timely. Thus, the control apparatus 41 does not need to refer to the database of the recording apparatus 46. This eliminates the need to build the database in advance.

It should be noted that the control apparatus 41 may refer to the database in this exemplary embodiment also. In this case, it is preferred to perform transmission and reception of a message through RNC-HNB interface or HNB-HNB interface only when an entry related to the target HNB 42 does not exist in the database. This prevents message transmission and reception from occurring frequently.

### <Eighth exemplary embodiment>

In this exemplary embodiment, another alternative example of the above-described fourth to sixth exemplary embodiments of the invention is described. In this exemplary embodiment, an example in which the entry into and update of the database that stores Inbound Mobility capability are performed based on message transmission and reception through the upper network 15 including the core network 151 and the HNB GW 152 is described. Note that the overall network configuration of the mobile communication system according to the exemplary embodiment may be the same as the configuration of the fourth exemplary embodiment shown in Fig. 27.

As the message through the upper network 15, a request message (RANAP: Relocation required, RANAP: Relocation request etc.) for connection switching (i.e. handover/SRNS relocation) of the UE 40 and a response message (RANAP: Relocation Request Acknowledge, RANAP: Relocation Command, RANAP: Relocation Failure, RANAP: Relocation Preparation Failure etc.) in response thereto may be used. In this point, this exemplary embodiment is similar to the fifth exemplary embodiment of the invention described above. However, in this exemplary embodiment, the response message, which is transmitted to the source control apparatus 41 in response to the connection switching request, includes a capability list. The capability list includes Inbound Mobility capability information of nearby HNB (not shown) located in the vicinity of the target HNB 42 which is specified by the connection switching request. The source control apparatus 41 updates the database stored in the recording apparatus 46 by using the capability list included in the response message to the connection switching request.

The capability list includes identification information of nearby base stations of the target HNB 42 and Inbound Mobility capability information of each nearby base station. Note that the capability list may include information of nearby base stations capable of Inbound Mobility only. Further, on the contrary, the capability list may include information of nearby base stations not capable of Inbound Mobility only. As the identification information of nearby base stations, CGI (Cell Global Identity) or CI (Cell Identity) may be used.

Further, the capability list may include Inbound Mobility capability information of the target HNB 42 itself. However, as described in the fifth exemplary embodiment and the like of the invention, when the response message (RANAP: Relocation Command, RANAP: Relocation Preparation Failure etc.) indicates Inbound Mobility capability of the target HNB 42 itself, the capability list does not need to include information of the target HNB 42 itself.

In order to exchange the capability list between the target HNB 42 and the source control apparatus 41 through the HNB GW 152 or the core network 151, the existing message may be extended for use. For example, the following messages may be used.
(1) RANAP (Radio Access Network Application Part) protocol
   RANAP: Relocation Request Acknowledge
   RANAP: Relocation Command
   RANAP: Relocation Preparation Failure
   RANAP: Relocation Failure
   RANAP: Direct Transfer
   RANAP: Information Transfer Indication/Confirmation
   RANAP: Direct Information Transfer
   RANAP: Uplink Information Exchange Request/Response
(2) RUA (RANAP User Adaption) protocol
   RUA: Direct Transfer
   RUA: Connection Less Transfer
(3) HNBAP (Home Node B (HNB) Application Part) protocol
   HNBAP: HNB Register Accept
   HNBAP: UE Register Accept
   HNBAP: UE Die-register

Further, when the target HNB 42 has the capability list of a nearby HNB, the capability list may be included into RRC Container (SRNS relocation info.) included in RANAP: Relocation Request Acknowledge message that is transmitted from the target HNB 42.

The target HNB 42 or the HNB GW 152 may acquire Inbound Mobility capability information of a nearby HNB as follows. When the target HNB 42 has the capability list, a network listening function may be incorporated into the target HNB 42 as described in the third exemplary embodiment of the invention. Then, the target HNB 42 may recognize Inbound Mobility capability of a nearby HNB by receiving support information broadcasted from the nearby HNB. Further, the target HNB 42 may receive a measurement report including information for determining Inbound Mobility capability from the UE as described in the second exemplary embodiment of the invention. Furthermore, the target HNB 42 may perform signaling with a nearby HNB by HNB-HNB interface and thereby collect Inbound Mobility capability information of the nearby HNB.

When the HNB GW 152 has the capability list, Inbound Mobility capability information may be collected in the process of HNB authentication and registration procedure performed between the HNB GW 152 and HNB under control thereof.

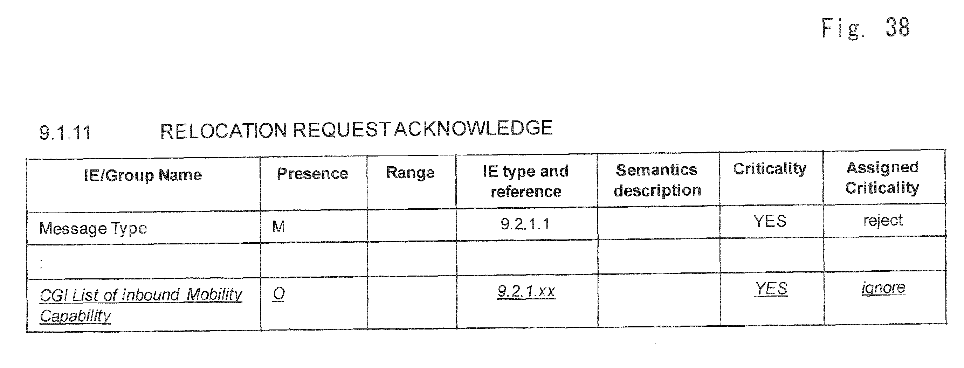

Hereinafter, specific examples of the message extended for transmitting the capability list and specific examples of the capability list are described with reference to Figs. 38 to 50. Figs. 38 to 42 are examples that can be used when the source cell 13 is a macro cell, and the source control apparatus 41 is RNC. Fig. 38 shows a modification example that adds new IE "CGI List of Inbound Mobility Capability" which can be used as the capability list to definition of "Relocation Request Acknowledge" described in 3GPP TS 25.413, section 9.1.11 that specifies RANAP signaling in Iu interface between the RNC and core network (underlined part of Fig. 38).

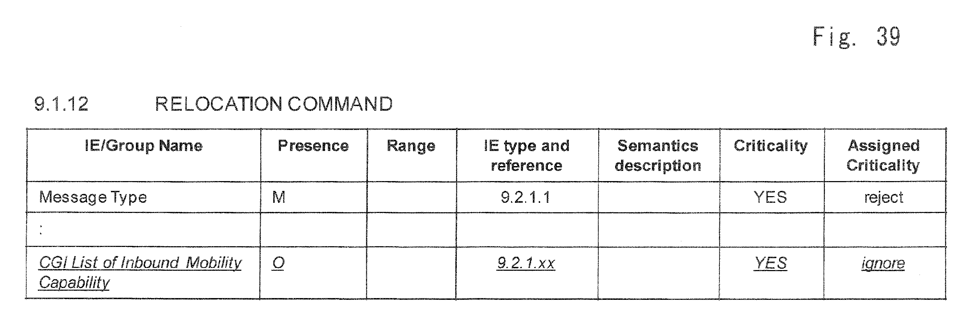

Fig. 39 shows a modification example that adds new IE "CGI List of Inbound Mobility Capability" which can be used as the capability list to definition of "Relocation Command" described in 3GPP TS 25.413, section 9.1.12 (underlined part of Fig. 39).

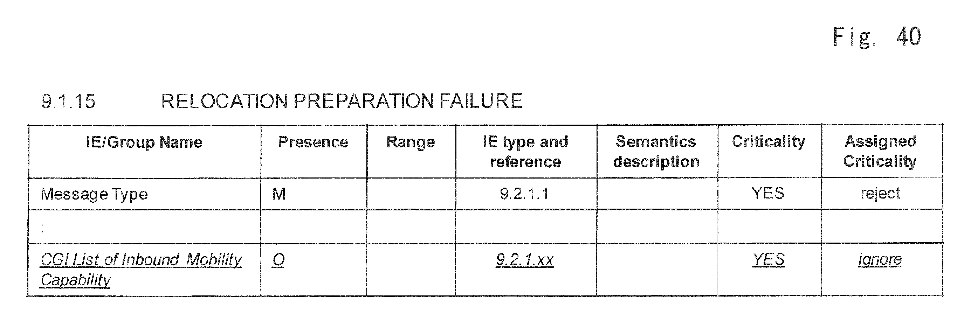

Fig. 40 shows a modification example that adds new IE "CGI List of Inbound Mobility Capability" which can be used as the capability list to definition of "Relocation Preparation Failure" described in 3GPP TS 25.413, section 9.1.15 (underlined part of Fig. 40).

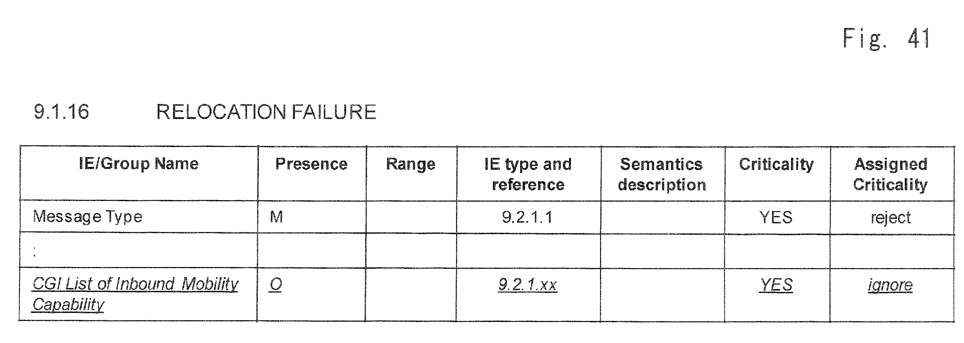

Fig. 41 shows a modification example that adds new IE "CGI List of Inbound Mobility Capability" which can be used as the capability list to definition of "Relocation Failure" described in 3GPP TS 25.413, section 9.1.16 (underlined part of Fig. 41).

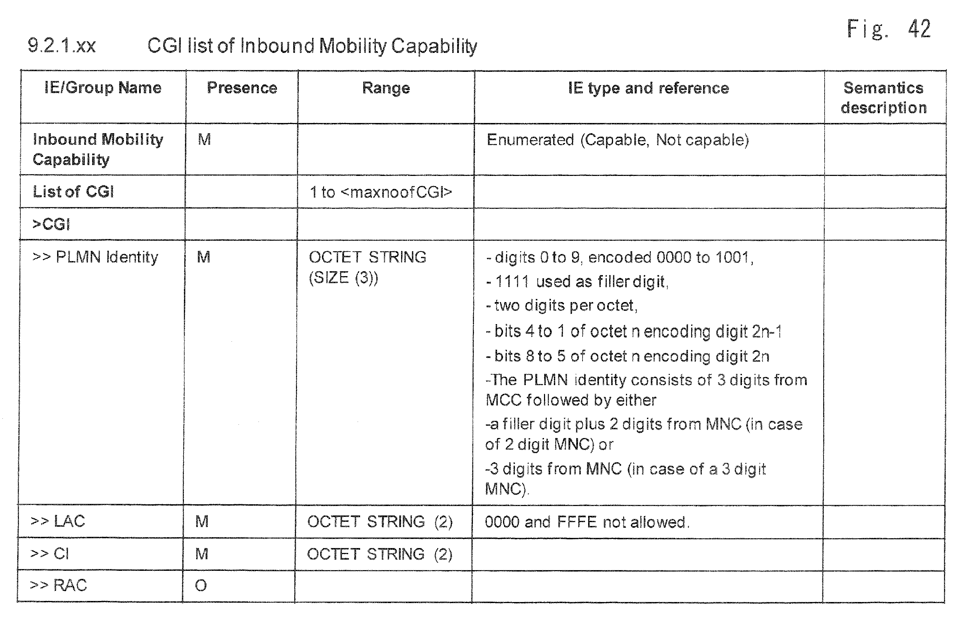

Fig. 42 shows an example of definition of the capability list (CGI List of Inbound Mobility Capability) that is transferred by RANAP message shown in Figs. 38 to 41. In the example of Fig. 42, the capability list includes "Inbound Mobility Capability" which indicates whether it is capable or not capable of Inbound Mobility, "List of CGI" which is the number of identification information of nearby base stations included in the list, and "CGI" which is identification information of nearby base stations. In the example of Fig. 42, CGI contains PLMN-id, LAC (Location Area Code) and CI as essential elements, and contains RAI (Routing Area Code) as an optional element. The definition of the capability list of Fig. 42 may be added to "Information Element Definitions" in 3GPP TS 25.413, section 9.2.

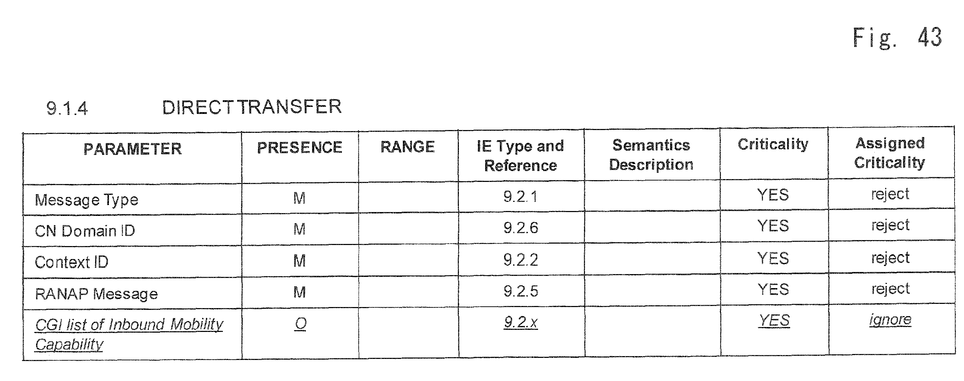

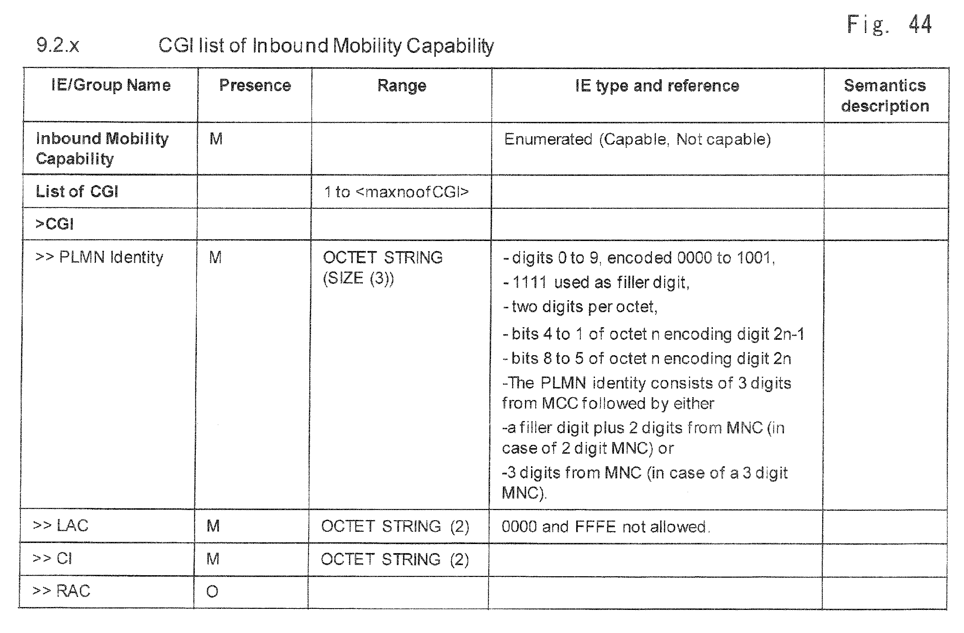

Figs. 43 and 44 are examples that can be used when the source cell 13 is a femtocell, and the source control apparatus 41 is HNB. Further, they are also examples that can be used between the target HNB 42 and the HNB GW 152 when the target HNB 42 manages the capability list. Fig. 43 shows a modification example that adds new IE "CGI List of Inbound Mobility Capability" which can be used as the capability list to definition of "Direct Transfer" described in 3GPP TS 25.468, section 9.1.4 that specifies RUA (RANAP User Adaption) signaling in Iuh interface between HNB and HNB GW (underlined part of Fig. 43).

Fig. 44 shows an example of definition of the capability list (CGI List of Inbound Mobility Capability) that is transferred by RUA message shown in Fig. 43. The structure of the capability list shown in Fig. 44 is the same as that shown in Fig. 42. The definition of the capability list of Fig. 44 may be added to "Information Element Definitions" in 3GPP TS 25.468, section 9.2.

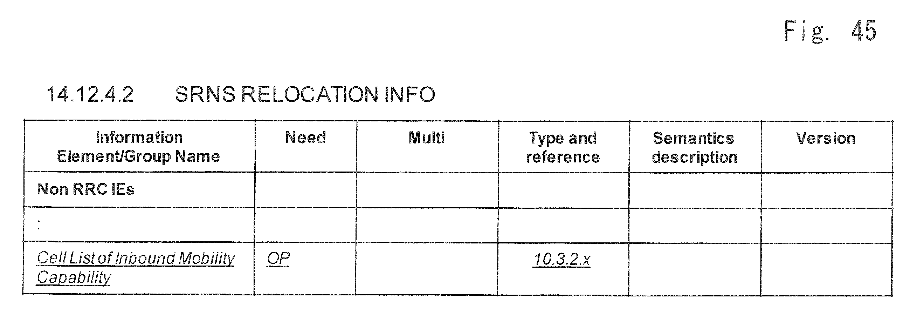

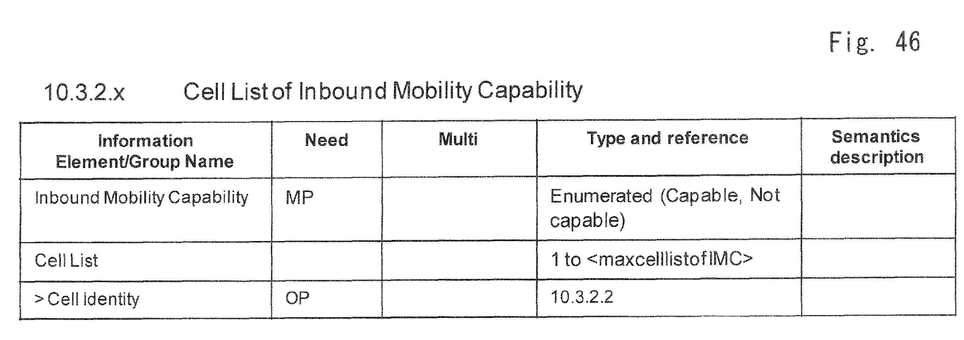

Figs. 45 and 46 show specific examples of the case where the capability list is transmitted, included in RRC Container (SRNS relocation info). As described above, Figs. 45 and 46 can be used when the target HNB 42 has the capability list.
Fig. 45 shows a modification example that adds new IE "Cell List of Inbound Mobility Capability" which can be used as the capability list to definition of "SRNS relocation info." described in 3GPP TS 25.331, section 14.12.4.2 that specifies RNC protocol (underlined part of Fig. 45).

Fig. 46 shows an example of definition of the capability list (Cell List of Inbound Mobility Capability) that is transferred by RRC Container shown in Fig. 45. In the example of Fig. 46, the capability list includes "Inbound Mobility Capability" which indicates whether it is capable or not capable of Inbound Mobility, "Cell List" which is the number of identification information of nearby base stations included in the list, and "CI (Cell Identity)" which is identification information of nearby base stations. The definition of the capability list of Fig. 46 may be added to "UTRAN mobility Information elements" in 3GPP TS 25.331, section 10.3.2.

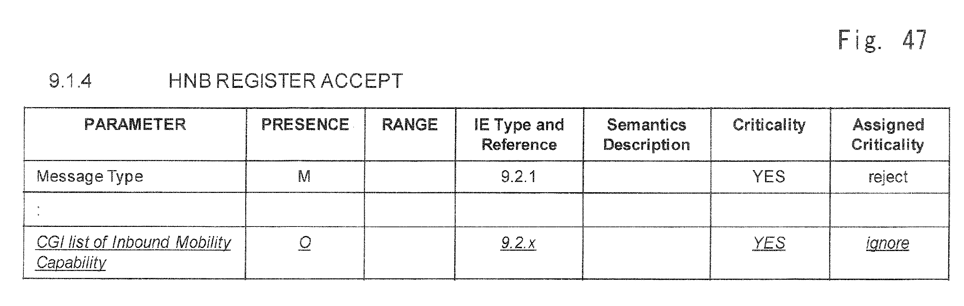

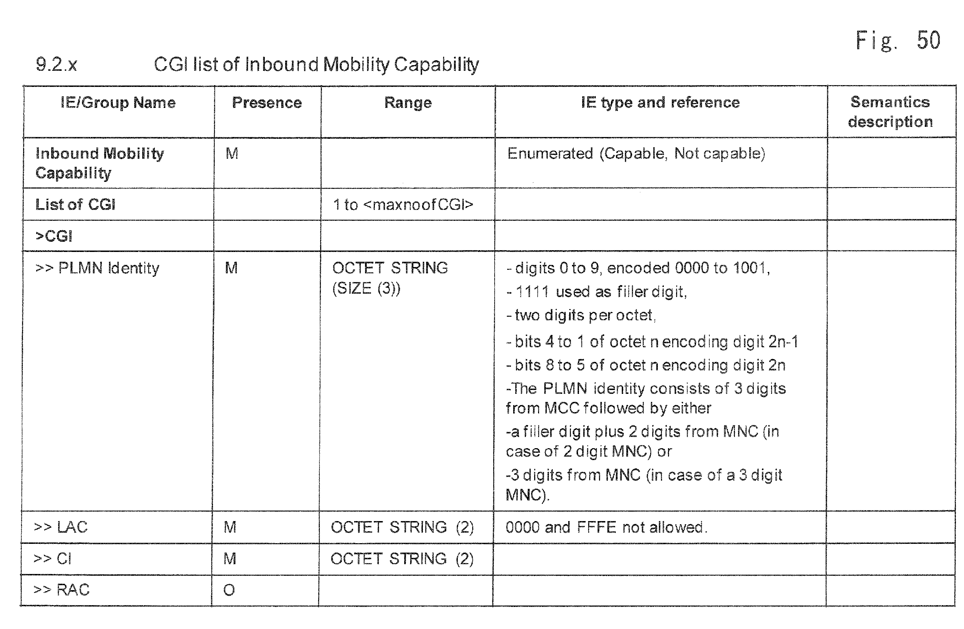

Figs. 47 and 50 are examples that can be used for transfer of the capability list between the target HNB 42 and the HNB GW 152, and between the source control apparatus 41 and the HNB GW 152 when the source control apparatus 41 is HNB. Fig. 47 shows a modification example that adds new IE "CGI List of Inbound Mobility Capability" which can be used as the capability list to definition of "HNB REGISTER ACCEPT" described in 3GPP TS 25.469, section 9.1.4 that specifies HNBAP (Home Node B Application Part) signaling in Iuh interface between HNB and HNB GW (underlined part of Fig. 47).

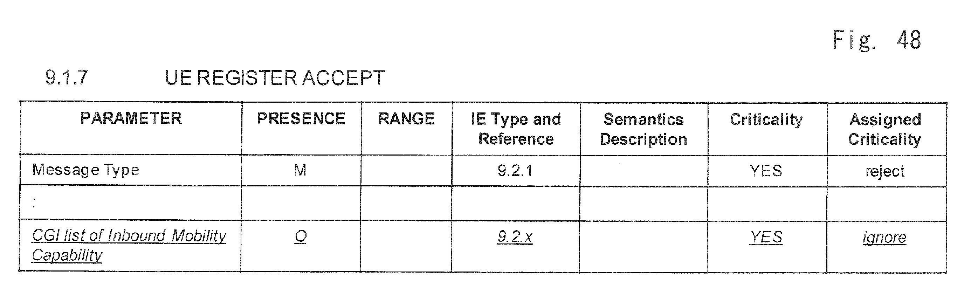

Fig. 48 shows a modification example that adds new IE "CGI List of Inbound Mobility Capability" which can be used as the capability list to definition of "UE REGISTER ACCEPT" described in 3GPP TS 25.469, section 9.1.7 (underlined part of Fig. 48).

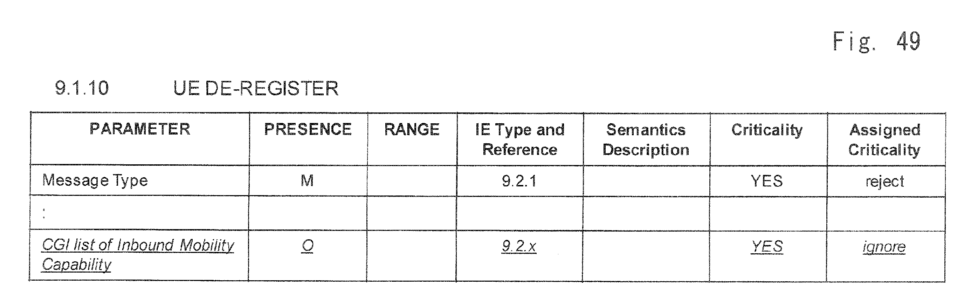

Fig. 49 shows a modification example that adds new IE "CGI List of Inbound Mobility Capability" which can be used as the capability list to definition of "UE DE-REGISTER" described in 3GPP TS 25.469, section 9.1.10 (underlined part of Fig. 49).

Fig. 50 shows an example of definition of the capability list (CGI List of Inbound Mobility Capability) that is transferred by HNBAP message shown in Figs. 47 to 49. The structure of the capability list shown in Fig. 50 is the same as that shown in Fig. 42. The definition of the capability list of Fig. 50 may be added to "Information Element Definitions" in 3GPP TS 25.469, section 9.2.

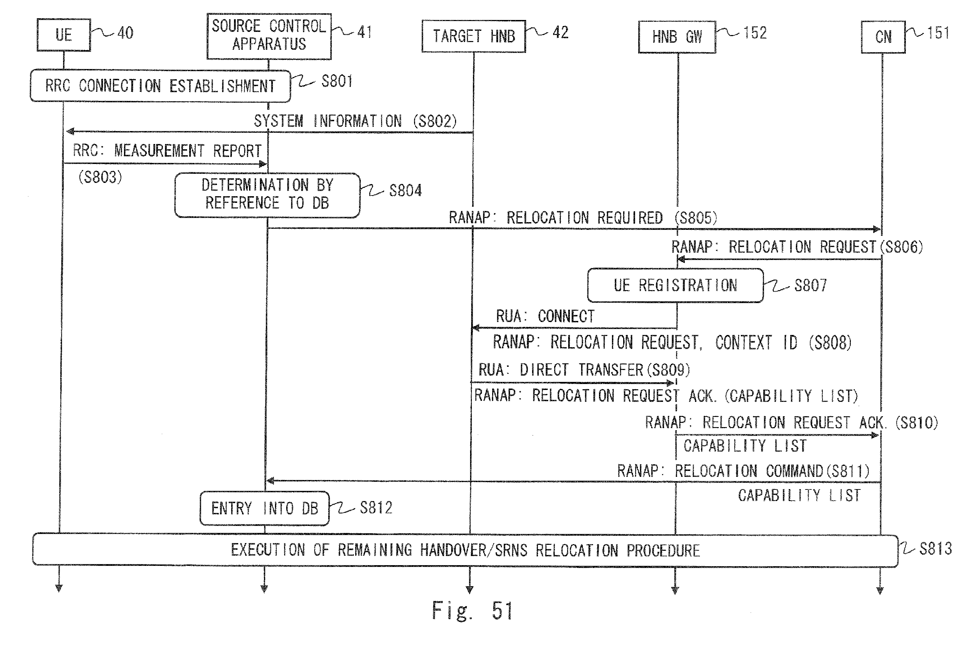

Hereinafter, several specific examples of the database update procedure in this exemplary embodiment are described with reference to sequence diagrams. The sequence diagram of Fig. 51 shows the case where the source cell 13 is a macro cell, and the target cell 14 (target HNB 42) supports Inbound Mobility. Steps S801 to S804 of Fig. 51 are the same as Steps S401 to S404 of Fig. 29. In Step S804, the source control apparatus 41 compares the cell identification information reported from the UE 40 with identification information stored in the database and determines whether or not the target HNB 42 supports Inbound Mobility.

The example of Fig. 51 assumes the case where information indicating that the target HNB 42 supports Inbound Mobility is stored in the database or information about the target HNB 42 is not stored in the database. Therefore, to start the handover/SRNS relocation procedure, the source control apparatus 41 transmits a relocation request (RANAP: Relocation Required) as a connection switching request (Step S805). After Step S805, Steps S805 to S808 and S813 are the same as Steps S904 to S907 and S911 shown in Fig. 57.

Steps S809 to S811of Fig. 51 are the same as Steps S908 to S910 of Fig. 57 except that the capability list is included in the message. Note that, when the HNB GW 152 has the capability list about HNB under its control, RUA: Direct Transfer message including RANAP: Relocation Request Acknowledge message transmitted from the target HNB 42 in Step S809 does not need to include the capability list.

In Step S812, the source control apparatus 41 refers to an approval notification (RANAP: Relocation Command) received through the core network 151 and the support information included therein and updates the database stored in the recording apparatus 46 to enter information about the target HNB 42 and the nearby HNB.

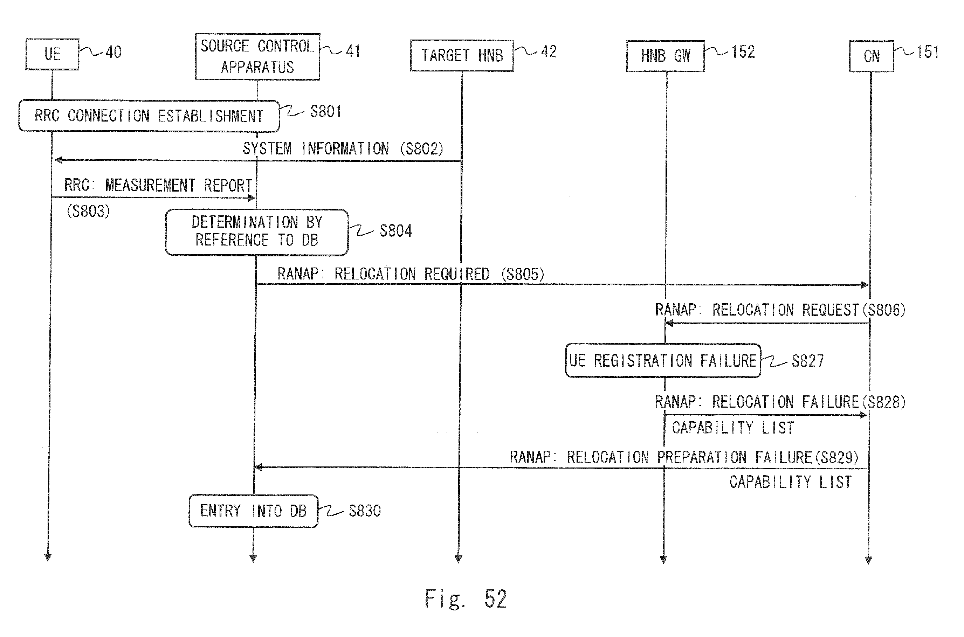

The sequence diagram of Fig. 52 shows the case where the source cell 13 is a macro cell, and the target cell 14 (target HNB 42) does not support Inbound Mobility. Steps S801 to S806 of Fig. 52 are the same as Steps S801 to S806 shown in Fig. 51. Note that, however, Fig. 52 assumes the case where the target cell 14 (target HNB 42) does not support Inbound Mobility. Therefore, the target control apparatus 41 transmits a relocation request (RANAP: Relocation Required) when information about the target HNB 42 is not stored in the database, for example (Step S805). Further, the target control apparatus 41 may transmit a relocation request to the target HNB 42 in the following cases also. A first case is where information about the target HNB 42 stored in the database is wrong, and information indicating that the target HNB 42 supports Inbound Mobility is stored in the database. A second case is where information indicating that the target HNB 42 does not support Inbound Mobility is stored in the database but there is only little information about the nearby HNB (not shown) of the target HNB 42. In this case, the target control apparatus 41 may perform the relocation procedure for the purpose of acquiring information about the nearby HNB of the target HNB 42, assuming that the relocation procedure will fail.

In Step S827, just like Step S946 of Fig. 59, the HNB GW 152 fails in UE REGISTRATION. Steps S828 to S829 of Fig. 52 are the same as Steps S947 to S948 of Fig. 59 except that the capability list is included in the message. In Step S830, the source control apparatus 41 refers to a failure notification (RANAP: Relocation Preparation Failure) received through the core network 151 and the capability list included therein, and updates the database stored in the recording apparatus 46 to enter information about the target HNB 42 and the nearby HNB.

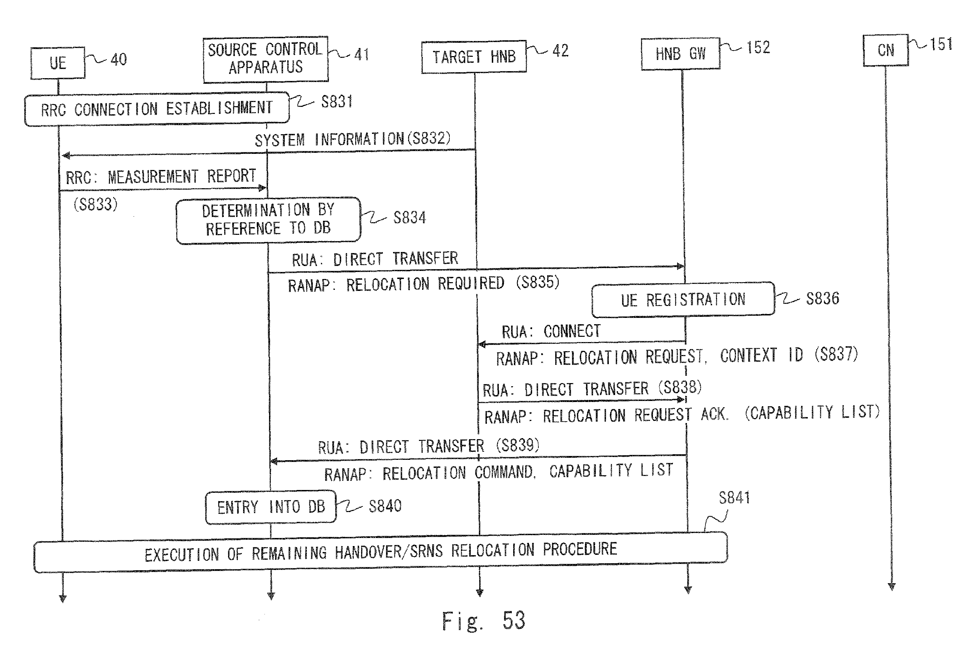

The sequence diagram of Fig. 53 shows the case where the source cell 13 is a femtocell, and the target cell 14 (target HNB 42) supports Inbound Mobility. Steps S831 to S834 of Fig. 53 are the same as Steps S801 to S804 shown in Fig. 51. Further, Steps S835 to S837 and S841 are the same as Steps S921 to S926 and S929 shown in Fig. 58.

Steps S838 to S839 of Fig. 53 are the same as Steps S927 to S928 of Fig. 58 except that the capability list is included in the message. Note that, when the HNB GW 152 has the capability list about HNB under its control, RUA: Direct Transfer message including RANAP: Relocation Request Acknowledge message transmitted from the target HNB 42 in Step S838 does not need to include the capability list. In Step S840, the source control apparatus 41 refers to the capability list received through the core network 151 and updates the database stored in the recording apparatus 46.

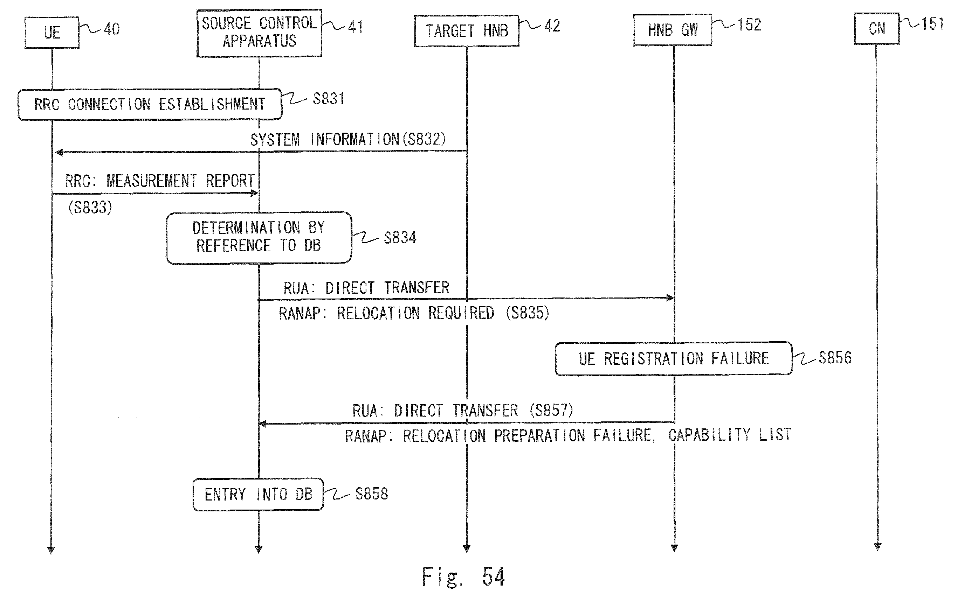

The sequence diagram of Fig. 54 shows the case where the source cell 13 is a femtocell, and the target cell 14 (target HNB 42) does not support Inbound Mobility. Steps S831 to S835 of Fig. 54 are the same as Steps S831 to S835 shown in Fig. 53. Note that, however, Fig. 54 assumes the case where the target cell 14 (target HNB 42) does not support Inbound Mobility. Therefore, the target control apparatus 41 transmits a relocation request (RANAP: Relocation Required) when information about the target HNB 42 is not stored in the database (Step S835).

In Step S856, just like Step S965 of Fig. 60, the HNB GW 152 fails in UE REGISTRATION. Step S857 of Fig. 54 is the same as Step S966 of Fig. 60 except that the capability list is included in the message. In Step S858, the source control apparatus 41 refers to a failure notification (RANAP: Relocation Preparation Failure) received from the HNB GW 152 and the capability list included therein, and updates the database stored in the recording apparatus 46 to enter information about the target HNB 42 and the nearby HNB.

As described above, in this exemplary embodiment, the capability list indicating Inbound Mobility capability of base stations located in the vicinity of the target HNB 42 is transmitted by using the response message transmitted from the target side in response to the connection switching request message to the target HNB 42. The source control apparatus 41 can thereby acquire Inbound Mobility capability of base stations located in the vicinity of the target HNB 42 to which the UE 40 is likely to move with little signaling.

It should be noted that, although the case where the present invention is applied to the UTRAN system is described in the first to eighth exemplary embodiments of the invention, the present invention may be applied also to another mobile communication system, not limited to the UTRAN system. Further, the present invention may be applied also to the connection switching of UE between different systems. For example, a base station that forms the source cell 13 may be a macro base station or a home base station of E-UTRAN, GERAN (GSM/EDGE Radio Access Network), or GSM (Global System for Mobile Communications) specified in the 3GPP. Further, a base station that forms the target cell 14 may be a macro base station or a home base station of GERAN or GSM.

Further, the present invention is not limited to the exemplary embodiments described above, and various changes and modifications may be made without departing from the scope of the invention.

This application is based upon and claims the benefit of priority from Japanese patent application No. 2009-185149, filed on August 7, 2009 and Japanese patent application No. 2009-20571 1, filed on September 7, 2009, the disclosures of which are incorporated herein in its entirety by reference.

### Reference Signs List

- 1, 2, 3, 4: MOBILE COMMUNICATION SYSTEM
- 0, 20, 30, 40: MOBILE STATION (UE)
- 11, 21, 31, 41: SOURCE CONTROL APPARATUS
- 11A: SOURCE RNC
- 11B: SOURCE HNB
- 12, 42: TARGET HNB
- 13: SOURCE CELL (MACRO CELL OR FEMTOCELL)
- 14: TARGET CELL (FEMTOCELL)
- 15: UPPER LEVEL NETWORK
- 17: MACRO NODE B
- 46: RECORDING APPARATUS
- 100: RADIO COMMUNICATION UNIT
- 103: BUFFER UNIT
- 105: MOBILITY CONTROL UNIT
- 120: RADIO COMMUNICATION UNIT
- 123: LINE IF
- 124: MOBILITY CONTROL UNIT
- 151: CORE NETWORK (CN)
- 152: HNB GATEWAY (HNB GW)
- 213: MOBILITY CONTROL UNIT

## Claims

1. A mobile communication system comprising:
a first base station that forms a first cell;
a second base station that forms a second cell;
a mobile station being capable of communicating with the first and second base stations; and
a control apparatus that controls connection switching of the mobile station from the first cell to the second cell, wherein
at least one of the first base station, the mobile station and the control apparatus is configured to be able to recognize whether or not the second base station is capable of connection switching of the mobile station from the first cell to the second cell, and
whether or not the control apparatus initiates connection switching of the mobile station from the first cell to the second cell is determined based on a recognition result of connection switching capability of the second base station.

2. The mobile communication system according to Claim 1,
wherein
the second base station is configured to transmit, into the second cell, a radio signal including first information for determining capability of connection switching to the second cell, and
at least one of the first base station, the mobile station and the control apparatus recognizes connection switching capability of the second base station based on a reception result of the first information.

3. The mobile communication system according to Claim 2,
wherein
the mobile station is configured to be able to receive the first information, and
connection switching capability of the second base stations is recognized based on a reception result of the first information by the mobile station.

4. The mobile communication system according to Claim 3,
wherein
the control apparatus receives a measurement report about reception quality of the radio signal from the second cell from the mobile station through the first base station, and determines to initiate connection switching to the second cell based on the measurement report, and
the mobile station inhibits transmission of the measurement report to the control apparatus when determining that the second base station is not capable of connection switching based on the first information.

5. The mobile communication system according to Claim 3,
wherein the control apparatus receives a report of a reception result of the first information from the mobile station and, when determining that the second base station is not capable of connection switching based on the report, does not initiate connection switching of the mobile station to the second cell.

6. The mobile communication system according to Claim 5,
wherein
the control apparatus notifies necessity of the report to the mobile station, and
the mobile station determines whether or not to make the report according to a request from the control apparatus.

7. The mobile communication system according to Claim 2,
wherein
the first base station is configured to be able to receive a radio signal including the first information transmitted from the second base station, and
the control apparatus does not initiate connection switching of the mobile station to the second cell when determining that the second base station is not capable of connection switching based on a reception result of the first information by the first base station.

8. The mobile communication system according to any one of Claims 2 to 7, wherein the first information includes version information indicating a system version with which the second base station complies.

9. The mobile communication system according to Claim 1,
wherein the control apparatus recognizes connection switching capability of the second base station by accessing a recording apparatus able to store information about connection switching capability of the second base station.

10. The mobile communication system according to Claim 9,
wherein the control apparatus updates the information stored in the recording apparatus based on a history of failures in connection switching to the second cell.

11. The mobile communication system according to Claim 9,
wherein the control apparatus recognizes connection switching capability of the second base station by exchanging a message with the second base station, and updates the information stored in the recording apparatus based on a result of the recognition.

12. The mobile communication system according to Claim 10 or 11, wherein the control apparatus invalidates information stored in the recording apparatus and indicating that the second base station is not capable of connection switching when a predetermined time has elapsed.

13. The mobile communication system according to Claim 10 or 11, wherein the control apparatus invalidates information stored in the recording apparatus and indicating that the second base station is not capable of connection switching when connection switching to the second cell has been inhibited a predetermined number of times.

14. The mobile communication system according to Claim 11,
wherein the second base station transmits a message indicating connection switching capability to the control apparatus upon any one of power ON of the second base station and firmware update of the second base station.

15. The mobile communication system according to any one of Claims 1 to 14, wherein the control apparatus is installed in the first base station.

16. The mobile communication system according to any one of Claims 1 to 15, wherein
the first base station is any one of a macro radio base station and a small radio base station of UTRAN, E-UTRAN, GERAN and GSM specified in 3GPP (Third Generation Partnership Project), and
the second base station is any one of a macro radio base station and a small radio base station of UTRAN, GERAN and GSM specified in 3GPP (Third Generation Partnership Project).

17. A base station apparatus comprising:
a transmitting means for transmitting broadcast information including cell identification information identifying its own cell and first information indicating whether or not connection switching of a mobile station to the its own cell is possible.

18. The base station apparatus according to Claim 17, wherein the first information includes version information indicating a system version with which the base station apparatus complies.

19. A mobile station apparatus comprising:
a radio communication means for performing radio communication with a base station; and
a control means for determining whether or not to transmit a measurement report about reception quality of a radio signal from an adjacent cell to the base station or a control station that manages the base station based on an analysis result of first information for determining whether or not the adjacent cell is capable of connection switching, the first information broadcasted in the adjacent cell.

20. A mobile station apparatus comprising:
a receiving means for receiving broadcast information including cell identification information identifying a cell of a base station and first information indicating whether or not connection switching to the base station is possible.

21. The mobile station apparatus according to Claim 20, further comprising:
a control means for determining whether or not the first information is included in the broadcast information, and determining whether or not to transmit the cell identification information to a control station that controls the base station based on a result of the determination.

22. The mobile station apparatus according to Claim 21, wherein, when the first information is not included in the broadcast information, the control means determines not to transmit the cell identification information to the control station.

23. The mobile station apparatus according to Claim 21, further comprising:
a transmitting means for transmitting the cell identification information to the control station based on control of the control means when the first information is included in the broadcast information.

24. The mobile station apparatus according to any one of Claims 20 to 23, wherein the first information is included in a system information block of the broadcast information.

25. The mobile station apparatus according to any one of Claims 20 to 23, wherein the first information is included in a main block of the broadcast information.

26. The mobile station apparatus according to any one of Claims 20 to 25, wherein the transmitting means transmits the cell identification information and the first information to the control station.

27. The mobile station apparatus according to any one of Claims 20 to 26, wherein the first information is version information indicating a system version with which the base station complies.

28. A control apparatus that controls connection switching of a mobile station from a first cell to a second cell, the control apparatus comprising:
a connection switching control means for determining whether or not to initiate connection switching of the mobile station to the second cell based on (a) a measurement report about reception quality of a radio signal from the second cell and (b) first information for determining whether or not the second cell is capable of connection switching, both received from the mobile station through a first base station that forms the first cell.

29. The control apparatus according to Claim 28, wherein the first information is information broadcasted into the second cell by a second base station that forms the second cell.

30. A control apparatus that controls connection switching of a mobile station from a first cell to a second cell, the control apparatus comprising:
a connection switching control means for determining whether or not to initiate connection switching of the mobile station from the first cell to the second cell by accessing a recording apparatus able to store information about connection switching capability of the second cell.

31. The control apparatus according to Claim 30, wherein the connection switching control means updates the information stored in the recording apparatus based on a history of failures in connection switching to the second cell.

32. The control apparatus according to Claim 30, wherein the connection switching control means recognizes connection switching capability of the second base station by exchanging a message with a second base station that forms the second cell, and updates the information stored in the recording apparatus based on a result of the recognition.

33. The control apparatus according to any one of Claims 30 to 32, wherein the connection switching control means invalidates information stored in the recording apparatus and indicating that the second cell is not capable of connection switching when a predetermined time has elapsed.

34. The control apparatus according to any one of Claims 30 to 32, wherein the connection switching control means invalidates information stored in the recording apparatus and indicating that the second cell is not capable of connection switching when connection switching to the second cell has been inhibited a predetermined number of times.

35. A control method of connection switching in a control apparatus that controls connection switching of a mobile station from a first cell to a second cell, comprising:
(a) receiving a measurement report about reception quality of a radio signal from the second cell from the mobile station;
(b) recognizing whether or not the second cell is capable of connection switching; and
(c) determining whether or not to initiate connection switching of the mobile station to the second cell based on the measurement report and a result of the recognizing.

36. The control method of connection switching according to Claim 35, further comprising:
(d) receiving first information for determining whether or not the second cell is capable of connection switching from the mobile station, wherein
the recognizing is performed by analyzing the first information.

37. The control method of connection switching according to Claim 35, wherein the recognition is performed by accessing a recording apparatus able to store information about connection switching capability of the second cell.

38. A non-transitory computer readable medium storing a program causing a computer to execute a control process comprising:
(a) analyzing first information for determining whether or not an adjacent cell is capable of connection switching, the first information broadcasted in the adjacent cell; and
(b) determining whether or not to transmit a measurement report about reception quality of a radio signal from the adjacent cell to a base station or a control station that manages the base station based on a result of the analyzing.

39. A non-transitory computer readable medium storing a program causing a computer to execute a control process for a mobile station including a radio communication means for performing radio communication with a base station; the control process comprising:
controlling the radio communication means to transmit, to the base station or a control station that manages the base station, a measurement report about reception quality of a radio signal from an adjacent cell and first information for determining whether or not the adjacent cell is capable of connection switching.

40. A non-transitory computer readable medium storing a program causing a computer to execute a process of controlling connection switching of a mobile station from a first cell to a second cell, the process comprising:
(a) acquiring a measurement report about reception quality of a radio signal from the second cell, received from the mobile station;
(b) recognizing whether or not the second cell is capable of connection switching; and
(c) determining whether or not to initiate connection switching of the mobile station to the second cell based on the measurement report and a result of the recognizing.

41. The mobile communication system according to Claim 1, further comprising:
an upper-level apparatus installed in a network between the second base station and the control apparatus, wherein
the control apparatus is configured to be able to determine whether or not to initiate connection switching of the mobile station from the first cell to the second cell by accessing a recording apparatus able to store information about connection switching capability of a plurality of base stations including the second base station, and is also configured to update the information stored in the recording apparatus based on a reception result of a message indicating connection switching capability of the second base station, the message generated by the second base station or the upper-level apparatus.

42. The mobile communication system according to Claim 41,
wherein
the message is generated by the second base station or the upper-level apparatus as a response to a connection switching request to the second base station generated by the control apparatus, and
the message includes information indicating connection switching capability of a nearby base station located near the second base station.

43. The mobile communication system according to Claim 42,
wherein the response is a failure response indicating that the second base station is not able to accept the connection switching request.

44. The mobile communication system according to Claims 42,
wherein the response is an approval response indicating that the second base station is able to accept the connection switching request.

45. The control apparatus according to Claim 30, wherein
a recording apparatus is configured to be able to store information about connection switching capability of a plurality of cells including the second cell, and
the connection switching control means updates the information stored in the recording apparatus based further on a reception result of a message indicating connection switching capability of the second base station, the message generated by the second base station or an upper-level apparatus installed in a network between the second base station and the control apparatus.

46. The control apparatus according to Claim 45, wherein
the message is generated by the second base station or the upper-level apparatus as a response to a connection switching request to the second base station generated by the control apparatus, and
the message includes information indicating connection switching capability of a nearby baste station located near the second base station.

47. The control apparatus according to Claim 46, wherein the response is a failure response indicating that the second base station is not able to accept the connection switching request.

48. The control apparatus according to Claim 46, wherein the response is an approval response indicating that the second base station is able to accept the connection switching request.

49. A target control apparatus comprising:
a control means for generating a response message to a request message requesting connection switching of a mobile station from a first base station to a second base station, wherein
the response message includes information indicating connection switching capability of a nearby base station located near the second base station.

50. The target control apparatus according to Claim 49, wherein the response message is a failure response indicating that the second base station is not able to accept connection switching of the mobile station.

51. The target control apparatus according to Claim 49, wherein the response is an approval response indicating that the second base station is able to accept connection switching of the mobile station.

52. The target control apparatus according to any one of Claims 49 to 51, wherein the target control apparatus is installed in the second base station or an upper-level apparatus that manages the second base station and the nearby base station.

53. A non-transitory computer readable medium storing a program causing a computer to execute a process of controlling connection switching of a mobile station from a first cell to a second cell, the process comprising:
(a) determining whether or not to initiates connection switching of the mobile station from the first cell to the second cell by accessing a recording apparatus able to store information about connection switching capability of a plurality of cells including the second cell; and
(b) updating the information stored in the recording apparatus based on a reception result of a message indicating connection switching capability of the second base station, the message generated by the second base station or an upper-level apparatus installed in a network between the second base station and the control apparatus.

54. The non-transitory computer readable medium according to Claim 53, wherein
the message is generated by the second base station or the upper-level apparatus as a response to a connection switching request to the second base station generated by the control apparatus, and
the message includes information indicating connection switching capability of a nearby base station located near the second base station.

55. A non-transitory computer readable medium storing a program causing a computer to execute a process related to connection switching, the process comprising:
generating a response message to a request message requesting connection switching of a mobile station from a first base station to a second base station, wherein
the response message includes information indicating connection switching capability of a nearby base station located near the second base station.

56. A control method of connection switching in a control apparatus that controls connection switching of a mobile station from a first cell to a second cell, comprising:
(a) determining whether or not to initiate connection switching of the mobile station from the first cell to the second cell by accessing a recording apparatus able to store information about connection switching capability of a plurality of cells including the second cell; and
(b) updating the information stored in the recording apparatus based on a reception result of a message indicating connection switching capability of the second base station, the message generated by the second base station or an upper-level apparatus installed in a network between the second base station and the control apparatus.

57. The control method according to Claim 56, wherein
the message is a message generated by the second base station or the upper-level apparatus as a response to a connection switching request to the second base station generated by the control apparatus, and
the message includes information indicating connection switching capability of a nearby base station located near the second base station.

58. A control method of a control apparatus used in a mobile communication system, comprising:
generating a response message to a request message requesting connection switching of a mobile station from a first base station to a second base station, wherein
the response message includes information indicating connection switching capability of a nearby base station located near the second base station.
